# EUROPÄISCHE PATENTSCHRIFT

(11) **EP 1 570 946 B1**
(45) Veröffentlichungstag und Bekanntmachung des Hinweises auf die Patenterteilung: **10.06.2009**
(21) Anmeldenummer: 05004728.1
(22) Anmeldetag: 03.03.2005
(51) Int. Cl.: B23Q 3/157, B23Q 3/155

(54) **Werkzeugmaschine mit mindestens zwei Werkzeugspindeln und einer Werkzeugmagazinscheibe**
Machine tool with at least two tool spindles and a tool disc
Machine-outil avec au moins deux broches porte-outils et un disque à outils

(30) Priorität: 03.03.2004 DE 102004010978; 28.06.2004 DE 102004031066
(43) Veröffentlichungstag der Anmeldung: 07.09.2005
(73) Patentinhaber: Grob-Werke GmbH & Co. KG, 87719 Mindelheim (DE)
(72) Erfinder: Lutz, Heinrich, 87742 Dirlewang (DE); Kienle, Anton, 87775 Salgen (DE)
(74) Vertreter: Pfister, Stefan Helmut Ulrich

(56) Entgegenhaltungen:
- EP-A- 1 559 502
- DE-A1- 4 027 894
- DE-A1- 10 119 175
- DE-A1- 19 608 350
- DE-A1- 19 860 709
- DE-A1- 19 920 224

## Beschreibung

Die Erfindung betrifft eine Werkzeugmaschine nach dem Oberbegriff von Anspruch 1 (siehe z.B., DE-199 20 224-A).

Sogenannte mehrspindlige Werkzeugmaschinen sind hinlänglich bekannt. Bei diesen werden in einer Werkzeugmaschine mindestens zwei Arbeitsspindeln vorgehalten. Die gattungsgemäßen Werkzeugmaschinen werden oftmals für die zerspanende Werkstückbearbeitung eingesetzt. Die Vorzüge solcher Werkzeugmaschinen sind, daß sie eine hohe Zerspanleistung besitzen.

Für das Ein- beziehungsweise Auswechseln von Bearbeitungswerkzeugen an den Arbeitsspindeln ist eine als "Pick-Up-Technik" beschriebene verfahrensweise gebräuchlich. Für den Werkstückwechselprozeß ist es bekannt, das werkzeugmagazin stillstehend auszugestalten und die Arbeitsspindel wird gegen das Werkzeugmagazin heranbewegt. Für das Einsetzen oder Herausnehmen des Werkzeuges wird dazu eine Relativbewegung zwischen der Werkzeugmagazinscheibe und der Arbeitsspindel benötigt, die zum Beispiel von der Bewegung der Arbeitsspindel abgeleitet ist.

Eine Werkzeugmaschine der zuvor beschriebenen Art ist beispielsweise als 2-Spindel-werkzeugmaschine mit 2-Scheiben-Magazin ausgeführt. Dabei wird eine werkzeugmaschine bereitsgestellt, bei der an einem Maschinenständer zwei Spindelstöcke mit jeweils einer Arbeitsspindel vorgesehen sind, die unabhängig voneinander in vertikaler und horizontaler Richtung verfahrbar sind. An der Oberseite des Maschinenständers befindet sich ein Werkzeugspeicher, der aus zwei voneinander unabhängigen, dicht nebeneinander angeordneten Scheiben- oder Tellermagazinen besteht. Die Scheiben- oder Tellermagazine weisen zur Aufnahme von Bearbeitungswerkzeugen zangenartige Aufnahmen auf.

Eine weitere Vorrichtung zur Bearbeitung von Werkstücken ist aus dem Stand der Technik bekannt. Diese Vorrichtung hat ein Gestell, an dem wenigstens ein Spindelkopf mit einer Arbeitsspindel in zumindest einer Richtung verstellbar gelagert ist. Die Vorrichtung besitzt auch wenigsten ein Werkzeugwechselmagazin, aus dem Werkzeuge entnommen und in dem Werkzeuge abgelegt werden können.

Aus dem Stand der Technik ist eine Werkzeugmaschine bekannt. Bei dieser Werkzeugmaschine mit einer vorzugsweise in drei Achsrichtungen verfahrbaren Ein- oder Mehrspindeleinheit zur Werkzeugaufnahme sowie einem Werkzeugmagazin sind das Werkzeugmagazin und die Ein- oder Mehrspindeleinheit zum Werkzeugwechsel zumindest zeitweise gleichzeitig relativ zueinander bewegbar.

Für einen möglichst effizienten Einsatz der Werkzeugmaschine ist es bekannt, Werkzeugmagazine vorzuhalten, die zum einen Werkzeuge redundant aufnehmen, um zum Bei Werkzeugverschleiß eine Unterbrechung der Bearbeitung möglichst auszuschließen. Natürlich dient das Werkzeugmagazin aber auch dazu, eine Vielzahl unterschiedlicher Bearbeitungswerkzeuge für unterschiedliche Bearbeitungen an der Arbeitsspindel vorzuhalten.

Aus der Druckschrift DE 101 19 175 A1 ist eine Vorrichtung zur Bearbeitung von Werkstücken sowie ein Verfahren zur Bearbeitung von Werkstücken unter Verwendung einer solchen Vorrichtung bekannt. Dabei wird in dieser Druckschrift eine Werkzeugmaschine vorgestellt, die wenigstens zwei Arbeitsspindeln aufweist, die jedoch entweder von separaten Werkzeugmagazinen oder von einem Kettenmagazin versorgt werden.

Die deutsche Offenlegungsschrift DE 199 20 224 A1 zeigt eine zwei-Spindel-Werkzeugmaschine mit zwei Scheibenmagazinen. Die beiden Scheibenmagazine sind dabei abhängig voneinander in vertikaler und horizontaler Richtung verfahrbar und versorgen jeweils nur eine der beiden Spindeln.

Gattungsgemäße Werkzeugmaschinen müssen daher derart ausgebildet sein, daß eine möglichst hohe Anzahl von Bearbeitungswerkzeugen zur Verfügung steht.

Die Erfindung hat es sich zur Aufgabe gemacht, bei einer Maschine mit zwei Spindeln, den Werkzeugwechsel zu optimieren.

Gelöst wird diese Aufgabe durch eine Werkzeugmaschine nach Anspruch 1. Dabei ist es vorgesehen, daß die Zangenachse der Werkzeugzange auf der jeweiligen Werkzeugmagazinscheibe radial angeordnet ist und die Zangenachse mit der Verbindungslinie zwischen der Rotationsachse und der werkzeugmagazinscheibe und der werkzeugachse des in der Werkzeugzangen ruhenden Bearbeitungswerkzeuges einen spitzen Winkel α einschließt, wobei die Werkzeugzangen als Paare gruppiert auf der Werkzeugmagazinscheibe angeordnet sind.

Die Werkzeugzange ist gebildet von einer Aufnahme, die mit dem Schaft des Bearbeitungswerkzeuges zusammenwirkt. Des weiteren sind entsprechend ausgestaltete Haltevorrichtungen vorgesehen, die sicherstellen, daß das Bearbeitungswerkzeug sicher in der Werkzeugzange gehalten ist und nicht unbeabsichtigt herausfällt. Die Werkzeugzange setzt dabei nicht zwingend zwei miteinander zusammenwirkende Zangenbacken voraus, der Begriff Werkzeugzange ist vielmehr als Oberbegriff zu verstehen, der jegliche Möglichkeit des Aufnehmens und Haltens von Bearbeitungswerkzeugen in den Werkzeugmagazinscheiben der gattungsgemäßen Werkzeugmaschinen beschreibt.

Die Werkzeugzange besitzt eine gewisse Längserstreckung. Diese Längserstreckung ist oftmals auch die Symmetrieachse der Werkzeugzange. Als Zangenachse wird insofern die Hauptrichtung dieser Längserstreckung angesehen, die in einer speziellen Variante der Erfindung mit der Symmetrieachse der Werkzeugzange zusammenfällt. Die Zangenachse wird aber auch dadurch definiert, daß die Werkzeugachse, also die Drehachse des Bearbeitungswerkzeuges und der Schwerpunkt der Werkzeugzange, Teil der Zangenachse sind.

Die Werkzeugzange ist dabei derart schlank ausgebildet, daß sie sich nach innen, weg vom Bearbeitungswerkzeug entsprechend verjüngt, damit die Anordnung des Bearbeitungswerkzeuges auf dem Umfang der Werkzeugmagazinscheibe in möglichst hoher Dichte erfolgt, da durch die Bereitstellung einer hohen Anzahl von Werkzeugzangen natürlich auch eine hohe Zahl von Bearbeitungswerkzeugen auf der Werkzeugmagazinscheibe eingelagert werden können.

Ähnlich günstig ist auch eine Anordnung, bei welcher die zangenachse mit der Verbindungslinie zwischen der Rotationsachse der Werkzeugmagazinscheibe und der Werkzeugachse des in der Werkzeugzange ruhenden Bearbeitungswerkzeuges einen spitzen Winkel einschließt. Eine gewisse Verkippung in Richtung der jeweiligen Tangente (bezogen auf die Rotationsachse) verringert unmerklich das Speichervermögen an Werkzeugen der Werkzeugmagazinscheibe, bietet aber bei dem Be- und Entladen der Werkzeuge in die Spindel gewisse Vorteile. Insbesondere wenn die Spindeln eng zueinander positioniert sind, ist es mit einer solchen Anordnung auch möglich, gleichzeitig die Werkzeuge mehrerer Spindeln auszutauschen.

Die Erfindung erlaubt dabei verschiedene konstruktive Vorschläge. Zunächst ist es möglich, daß die erfindungsgemäße Werkzeugmaschine für mindestens zwei Arbeitsspindeln zwei (oder noch mehr) Werkzcugmagazinscheiben vorsieht. Günstigerweise werden dabei die Arbeitsspindeln in eine entsprechende Anzahl von Arbeitsspindelgruppen aufgeteilt, wobei die Anzahl dieser Gruppen der Anzahl der Werkzeugmagazinscheiben entspricht.

Dabei ist es im Sinne der Erfindung unbeachtlich, ob die Anzahl der Arbeitsspindeln pro Gruppe gleich oder unterschiedlich ist. Beide Varianten sind hierbei möglich.

Gegenüber den aus dem Stand der Technik bekannten Lösungen bietet die Erfindung den Vorteil, daß ein Werkzeugwechsel durch die besondere Art und Weise der Anordnung in dem werkzeugmagazin, insbesondere durch die Lagerung in speziell ausgebildeten und speziell angeordneten Werkzeugzangen wesentlich erleichtert ist. Der Werkzeugwechsel erfolgt dabei in wesentlich kürzerer zeit und bietet den Vorteil, recht störunanfällig zu sein. Bei den aus dem Stand der Technik bekannten Lösungen sind die Werkzeugaufnahmen entweder nur zangenartig ausgebildet oder weisen Zangen auf, die ungünstig für den Wechsel angeordnet sind oder aber selbst eine Ausbildung haben, die den Werkzeugwechsel nur in bestimmten Stellungen ermöglicht. Diese Verfahrensweise ist recht aufwendig und führt häufig zu Störungen. Zudem ist der Zeitverlust durch diese Verfahrensweise nicht unerheblich. Die Erfindung beseitigt die beschriebenen Nachteile, indem die zangenachse der werkzeugzange auf der jeweiligen Werkzeugmagazinscheibe radial angeordnet ist beziehungsweise die Zangenachse mit der Verbindungslinie zwischen der Rotationsachse der Werkzeugmagazinscheibe und der Werkzeugachse des in der Werkzeugzange ruhenden Bearbeitungswerkzeuges einen spitzen Winkel einschließt. Die aus dem Stand der Technik bekannten Lösungen sind auch durch einen ungünstigen Winkel der Anordnung der Werkzeugzangen beziehungsweise der Werkzeugaufnahmen gekennzeichnet.

Die andere konstruktive Variante, die gemäß der Erfindung möglich ist, ist eine Anordnung, bei welcher eine Scheibe für eine Mehrzahl von Spindeln beziehungsweise Spindelgruppen oder für alle Arbeitsspindeln einer Werkzeugmaschine vorgesehen ist. Die erfindungsgemäße Aufgabe wird daher sehr vielfältig gelöst. Die Erfindung erreicht dabei, daß eine große Anzahl von Bearbeitungswerkzeugen zur Verfügung gestellt werden, ohne dabei die Werkzeugmaschine in ihrer Stellfläche zu vergrößern.

Dieser Effekt wird noch gesteigert, wenn in einer Variante der Erfindung vorgesehen wird, daß die Werkzeugmagazinscheiben über der Arbeitsspindel angeordnet sind. In der Regel ist der Raum über der Werkzeugmaschine ungenutzt, die Hallenfläche aber wirkt sich stark beschränkend für die Anzahl der Werkzeugmaschinen aus, insbesondere wenn diese zu verketten sind. Günstigerweise werden daher die Werkzeugmagazinscheiben oberhalb der Arbeitsspindeln angeordnet und bei Bedarf dann an die Arbeitsspindel verbracht.

In einer Variante wird dabei vorgeschlagen, daß das Teilmagazin als um eine Rotationsachse rotierende Werkzeugmagazinscheibe ausgebildet ist. Gemäß dieser Variante wird hier vorgeschlagen, in gleicher weise eine Werkzeugmagazinscheibe als Teilmagazin im Sinne dieses Teils der Erfindung einzusetzen.

Alternativ ist es natürlich auch möglich, daß die Teilmagazine verfahrbar sind und an die Arbeitsspindel verbringbar sind, um den Werkzeugwechsel auszuführen.

Es ist günstig, daß die Teilmagazine oberhalb der Arbeitsspindel angeordnet sind. Sie können aber auch seitlich neben den Arbeitsspindeln oder unterhalb angeordnet sein. Die Erfindung ist diesbezüglich nicht begrenzt. Im Übrigen haben auf diesen Teil der Erfindung alle anderen Rückbezüge und auch alle anderen möglichen Merkmalskombinationen Gültigkeit; insbesondere ist es möglich, werkzeugzangen radial oder unter einem gewissen Winkel auf den als Werkzeugmagazinscheibe ausgebildeten Teilmagazinen anzuordnen.

In einer bevorzugten Variante der Erfindung ist vorgesehen, daß die Werkzeugmaschine zwei Werkzeugmagazinscheiben aufweist, die zumindest in der Werkzeugwechselposition nahe zueinander stehen.

Als Werkzeugwechselposition wird dabei die Anordnung verstanden, bei welcher der Werkzeugwechsel stattfindet, also die Werkzeugmagazinscheibe an der jeweiligen Arbeitsspindel ist, um das Werkzeug auszutauschen.

Daß die Werkzeugmagazinscheiben zumindest während des Werkzeugwechsels nahe zueinander orientiert sind, erlaubt es, mit zwei Werkzeugmagazinscheiben an zwei Arbeitsspindeln oder Gruppen von Arbeitsspindeln, die auch eng zueinander orientiert sind, gleichzeitig die Werkzeuge zu wechseln. Hierdurch wird die Effizienz gesteigert, da der Wechselprozeß gleichzeitig für alle Arbeitsspindeln durchgeführt wird.

Diese erfindungsgemäße Variante erlaubt dabei auch mehrere Ausgestaltungen. Zunächst ist es möglich, daß die beiden Werkzeugmagazinscheiben im Wesentlichen parallel verfahren werden und somit eigentlich die ganze Zeit, wie auch während des Wechselprozesses, relativ nahe zueinander angeordnet sind. Durch eine solche Ausgestaltung ist es zum Beispiel möglich, einen gemeinsamen Antrieb für die Werkzeugmagazinscheiben vorzusehen.

In einer anderen Variante ist es möglich, daß die Werkzeugmagazinscheiben in weit voneinander entfernten wartepositionen, außerhalb des Bearbeitungsraumes vorgehalten werden und nur für den Werkzeugwechsel in die Werkzeugposition, wie beschrieben, gebracht werden. Diese Variante erlaubt es, den Werkzeugaustausch in der Warteposition ökonomisch günstig vorzunehmen, da zum Beispiel Werkzeugmagazinscheiben entsprechend nach außen verfahren werden, wo das Bedienpersonal diese gut erreicht.

In einer bevorzugten Variante der Erfindung ist vorgesehen, daß die beiden Rotationsachsen der zwei Werkzeugmagazinscheiben parallel orientiert sind und/oder die zwei Werkzeugmagazinscheiben in einer Ebene liegen. Durch eine solche Ausgestaltung wird die Konstruktion erleichtert, da auch die Arbeitsspindeln im Raum gleich gelagert sind und oftmals gleichartig bewegt werden. Die Steuerung der gesamten erfindungsgemäßen Werkzeugmaschine wird dadurch entsprechend erleichtert. Durch die Anordnung wird auch erreicht, daß die Werkzeugachsen parallel sind mit den Achsen und so das Einwechseln beziehungsweise Auswechseln der Werkzeuge in einfacher weise möglich ist. In gleicher Weise ist es auch von Vorteil, wenn die zwei Werkzeugmagazinscheiben in einer Ebene liegen. Gerade wenn die Arbeitsspindeln gleichartig ausgebildet und eingebaut sind, wird dadurch ein einfacher geometrischer Bezug hergestellt und besonders das gemeinsame Wechseln, was zu einer entsprechenden Zeitersparnis führt, erleichtert.

Dabei grenzt die Erfindung nicht Lösungen aus, bei welchen die vorgenannten geometrischen Bezüge nicht bestehen. Natürlich gehören auch Anordnungen zur Erfindung, bei welchen die Rotationsachse nicht parallel zueinander sind oder aber die Werkzeugmagazinscheiben zueinander verkippt oder in parallelen Ebenen angeordnet sind.

Es ist dabei von Vorteil, daß die Erfindung vorsieht, daß die erste Werkzeugmagazinscheibe einer ersten Gruppe von Arbeitsspindeln zugeordnet ist und auch die zweite Werkzeugmagazinscheibe einer zweiten Gruppe von Arbeitsspindeln zugeordnet ist. Eine solche Anordnung läßt sich natürlich auch bei mehr als zwei Werkzeugmagazinscheiben problemlos realisieren. Diese Teilsysteme sind dann aufeinander abstimmbar und gegebenenfalls in sich wiederum redundant ausgebildet.

Es ist von Vorteil, wenn für die Werkzeugmagazinscheiben eine Führung vorgesehen ist, entlang der die Werkzeugmagazinscheibe in einer Linearbewegung linear bewegbar und an die Arbeitsspindel in eine Werkzeugwechselposition bringbar ist. Für die Ausgestaltung der Führung sind verschiedene Varianten möglich. Eine solche Anordnung bietet insbesondere den Vorteil, daß die werkzeugmagazinscheibe in eine Warteposition außerhalb des Bearbeitungsraumes verbringbar ist und dort, wo sie nicht stört, geparkt wird. Alternativ ist es natürlich möglich, nicht die werkzeugmagazinscheibe zu bewegen, sondern die Arbeitsspindeln zu der Werkzeugmagazinscheibe zu bringen. Auch diese kinematische Umgebung gehört zur Erfindung. Dabei ist auch vorgesehen, daß die Linearbewegung auch für die Ausführung in einer Relativbewegung für das Ein- beziehungsweise Auswechseln der Bearbeitungswerkzeuge eingesetzt wird. Insbesondere das Aufteilen der verschiedenen Bewegungsachsen in verschiedene Elemente spart Aufwand, da eine orthogonale Bewegung von Elementen, zum Beispiel der Kreuztisch für Arbeitsspindeln, entsprechend aufwendig ist.

Konstruktiv ist dabei vorgesehen, daß ein Schlitten auf der Führung verfährt und die Werkzeugmagazinscheibe auf dem Schlitten sitzt. In einer weiteren Ausgestaltung der Erfindung ist es dabei möglich, daß mehrere Werkzeugmagazinscheiben in einer gemeinsamen Führung gleichartig bewegbar sind. Zum Beispiel ist ein Schlittenbalken vorgesehen, der auf der Führung verfahrbar ist und der Schlittenbalken zwei oder mehrere Werkzeugmagazinscheiben trägt. Eine solche Anordnung ist zum Beispiel dann einsetzbar, wenn beide Werkzeugmagazinscheiben gleichzeitig für den Ein-/Auswechselprozeß heranzuführen sind. Der Antriebsaufwand wird halbiert.

Neben dieser abhängigen Bewegung der Werkzeugmagazinscheiben ist in einer Alternative erfindungsgemäß vorgesehen, daß mehrere Werkzeugmagazinscheiben unabhängig voneinander bewegbar sind. Hierzu sind dann entsprechende eigene Antriebe und auch Führungen beziehungsweise Führungselemente wie Schlitten vorgesehen. Es sei hierbei auch darauf hingewiesen, daß sowohl eine gleichartige wie auch unabhängige Bewegung der Arbeitsspindeln in gleicher Weise zur Erfindung gehören.

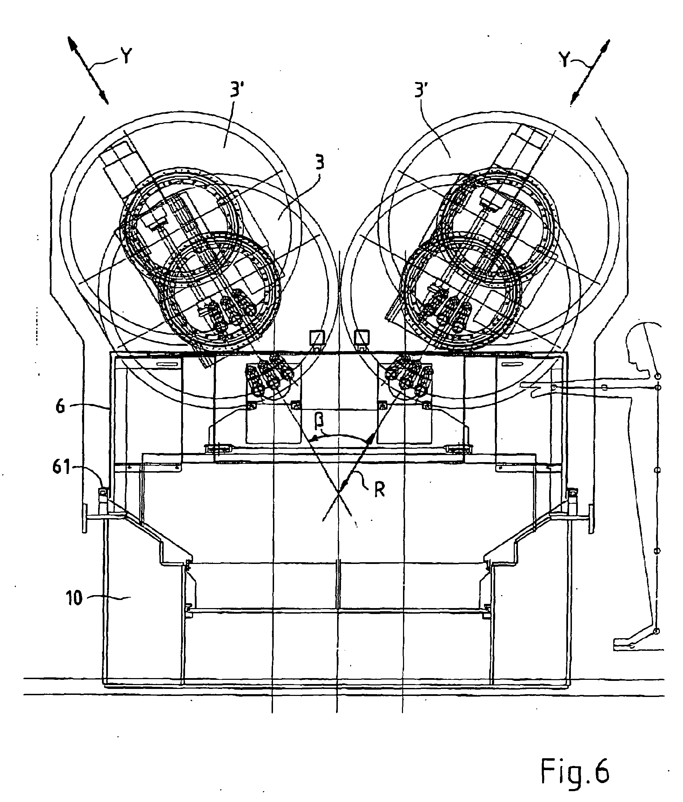

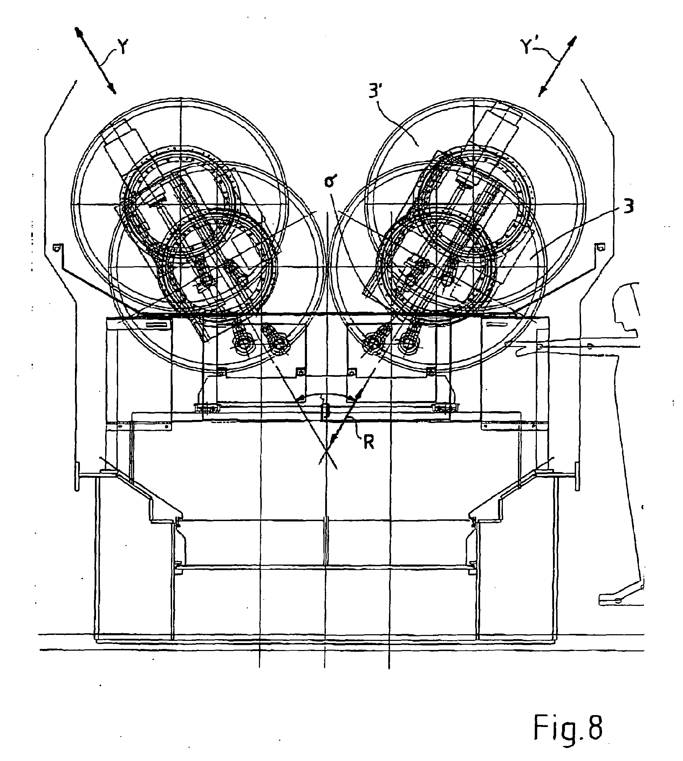

Des weiteren ist neben einer parallelen Führung mehrerer Werkzeugmagazinscheiben nach der Erfindung auch vorgesehen, daß jede von mehreren Werkzeugmagazinscheiben je eine eigene Führung aufweist und die jeweiligen Bewegungsrichtungen unter einem Winkel, insbesondere einem stumpfen oder spitzen Winkel, miteinander einschließen, wie dies zum Beispiel in Figur 6 oder Figur 8 angedeutet ist. Eine solche Ausgestaltung führt dazu, daß die Werkzeugmagazinscheiben für den Wechselprozeß nah aneinander bringbar sind und so auch eng zueinander stehende Arbeitsspindeln bedienen, aber dann für die Warteposition weit entfernt voneinander werden und so zum Beispiel für eine Wartung der Werkzeuge durch das Bedienpersonal leicht zugänglich sind. Die schiefe Anordnung dieser verschiedenen Führungen hat aber auch Vorteile bei einem Ein- und Auswechseln der Werkzeuge selber, wie weiter unten noch beschrieben wird, insbesondere wenn der Abstand zwischen den Spindeln bezüglich des Durchmessers der Werkzeugmagazinscheibe gering ist. Auch eine Lösung, bei welchen die Werkzeugmagazinscheiben diametral, also unter einen Winkel von 180° auseinanderlaufen, sei es in vertikaler, horizontaler oder schräger Richtung, gehört zur Erfindung.

In einer bevorzugten Variante der Erfindung ist vorgesehen, daß die Werkzeugmagazinscheibe ringartig ausgebildet ist und einen Rotationsantrieb aufweist. Günstigerweise wird hierbei der Rotationsantrieb in die Öffnung des Ringes eingesetzt und so eine möglichst ausgewogener Antrieb realisiert. Alternativ dazu ist es möglich, die Werkzeugmagazinscheibe als tatsächlich tellerartige durchgehende Scheibe zu realisieren und den Antrieb auf die die Rotationsachse bildende Welle anzuordnen.

Nach der Erfindung ist es möglich, den Rotationsantrieb für jede Werkzeugmagazinscheibe einzeln auszugestalten, wodurch es möglich ist, mehrere Werkzeugmagazinscheiben jeweils unabhängig voneinander zu positionieren. Alternativ ist es auch möglich, diese Rotationsantriebe sinngemäß zu koppeln, um dadurch auch den Rotationsantrieb zu optimieren.

In einer Variante der Erfindung ist vorgesehen, dass die Werkzeugmagazinscheibe als Mehreck ausgebildet ist. Gemäß dieser Variante der Erfindung wird klar, dass mit der Formulierung einer Werkzeugmagazinscheibe nicht ausdrücklich eine kreisrunde Ausgestaltung vorgesehen ist, sondern diese Scheibe auch durchaus als Mehreck ausgebildet ist. Eine solche Ausgestaltung bietet Vorteile bei der Herstellung. Ein großer Vorteil gemäß der Erfindung ist, dass die Werkzeugzangen auf einem Kreis konzentrisch um die Rotationsachse angeordnet sind. Durch eine solche Anordnung wird eine hohe Werkzeugdichte auf der Werkzeugmagazinscheibe erreicht. Die einzelnen werkzeugzangen sind platzsparend nebeneinander anzuordnen, und alle Werkzeugzangen befinden sich idealerweise bei der gleichen Positionierung der Werkzeugmagazinscheibe an der jeweils gleichen Stelle, wenn das Bearbeitungswerkzeug einzuwechseln ist.

In einer bevorzugten Variante der Erfindung ist vorgesehen, dass in der Werkzeugwechselposition die Spindelachse der Arbeitsspindel und die Rotationsachse eine zur Linearbewegung parallele Gerade bilden. Bei diesem bevorzugten Fall der Erfindung dient die Linearbewegung der Werkzeugmagazinscheibe als Bewegung, um das Bearbeitungswerkzeug entweder aus der Werkzeugzange aufzunehmen oder in diese abzulegen. Besonders geschickt ist eine solche Anordnung dann, wenn die Führung der Werkzeugmagazinscheibe geneigt ist, wie zum Beispiel in Fig. 6 angedeutet. Die Anordnung ist dabei so getroffen, dass - obwohl verhältnismäßig große Werkzeugmagazinscheiben eingesetzt werden - die Bewegung der Werkzeugmagazinscheibe direkt ausgenutzt werden kann, um das Bearbeitungswerkzeug aufzunehmen oder abzulegen.

Alternativ hierzu ist vorgesehen, dass in der Werkzeugwechselposition die Verbindungslinie der Spindelachse der Arbeitsspindel und der Rotationsachse mit der Linearbewegung einen spitzen Winkel bildet. Bei diesem von dem vorher beschriebenen Fall abweichenden Vorschlag ist es sogar auch möglich, das Werkzeug direkt aus der Werkzeugzange zu entnehmen oder in diese hinein abzulegen. Dies wird durch eine hierfür angepaßte Ausgestaltung der Werkzeugzange begünstigt. Eine solche Ausgestaltung ist zum Beispiel in Fig. 8 gezeigt, bei der eine solche Variante insbesondere dann zum Tragen kommt, wenn durch eine Werkzeugmagazinscheibe zwei Spindeln gleichzeitig be- bzw. entladen werden sollen.

In einer weiteren erfindungsgemäßen Variante wird vorgeschlagen, dass die Relativbewegung aus einer Überlagerung von mindestens zwei Bewegungen, zum Beispiel der Werkzeugmagazinscheibe und/oder der Arbeitsspindel, resultiert. Nach der Erfindung ist es nicht nur vorgesehen, die Relativbewegung, die für das Ein- und Auswechseln des Bearbeitungswerkzeuges dient, nur aus einer Bewegung, zum Beispiel der Werkzeugmagazinscheibe oder der Arbeitsspindel, abzuleiten, sondern erfindungsgemäß wird die Überlagerung zweier Bewegungen und die hieraus resultierende Alternativbewegung genutzt. Durch eine geschickte Überlagerung dieser beiden Bewegungen wird dabei nämlich eine Resultierende erlangt, die in dem orthogonalen Feld der beiden einzelnen Bewegungen liegt. Durch die Wahl der jeweiligen Geschwindigkeiten der Einzelbewegungen ist die Orientierung der Resultierenden einstellbar. Dabei können sogar unterschiedliche Bewegungen ein und desselben Elementes, zum Beispiel der Werkzeugmagazinscheibe, im Sinne der Erfindung überlagert werden.

In einer speziellen Ausgestaltung des vorgenannten Vorschlages wird in einer weiteren erfindungsgemäßen Variante vorgesehen, dass die Relativbewegung aus einer Überlagerung der Linearbewegung der Werkzeugmagazinscheibe und einer Spindellinearbewegung der Arbeitsspindel resultiert. Bei einer solchen Ausgestaltung wird natürlich eine entsprechende Beweglichkeit der Arbeitsspindel benötigt; diese Beweglichkeit sollte zum Beispiel parallel zu der Ebene sein, in welcher die Werkzeugmagazinscheibe liegt.

Falls es aber möglich ist, auf einen separaten Bewegungs- bzw. Positionierantrieb für die Spindel verzichten zu können, wie das zum Beispiel bei Anordnungen möglich ist, bei welchen das Werkstück bewegt wird, so schlägt eine weitere Variante der Erfindung vor, dass die Relativbewegung aus einer Überlagerung der Linearbewegung der Werkzeugmagazinscheibe und einer Rotation der Werkzeugmagazinscheibe um deren Rotationsachse resultiert. Die sowieso zur Verfügung stehenden und benötigten Antriebe werden so ein weiteres Mal überraschenderweise günstig eingesetzt. Sowohl die Linearbewegung, die für das Heranführen der Werkzeugmagazinscheibe sowieso benötigt wird, wie auch der Rotationsantrieb, der für das Auswählen und Positionieren der gewünschten Werkzeugzange mit dem gewünschten Bearbeitungswerkzeug vorgesehen ist, werden somit nochmals, einzig und allein mit entsprechend geringen Programmieraufwand miteinander verbunden, eingesetzt.

Gemäß einer weiteren Variante der Erfindung ist vorgesehen, dass mehrere Arbeitsspindeln zu einer Gruppe von Arbeitsspindeln zusammengefaßt sind und gegebenenfalls auch in einem gemeinsamen Spindelstock gelagert sind. Insbesondere ist vorgesehen, dass die Arbeitsspindeln in zwei Spindelgruppen, eine erste und eine zweite Gruppe von Arbeitsspindeln aufgeteilt sind und diese Gruppen von Arbeitsspindeln entweder unabhängig voneinander, abhängig voneinander oder gleichartig zueinander bewegbar sind. Gemäß der Erfindung ist es hierbei möglich, einen zentralen Antrieb für beide bzw. alle Gruppen von Arbeitsspindeln einzusetzen. Hieraus resultiert dann eine jeweils abhängige Bewegung dieser beiden Gruppen. Sie kann dabei natürlich auch in jeweils unterschiedliche Richtung erfolgen, zum Beispiel mit Zuhilfenahme eines entsprechenden Getriebes. Die Bewegung kann dabei aber auch gleichartig sein, zum Beispiel dass die verschiedenen Arbeitsspindelgruppen auf einem gemeinsamen Spindelstock angeordnet sind und dieser Spindelstock gemeinsam zentral einmal angetrieben ist. Alternativ ist es natürlich auch möglich, dass die beiden Gruppen von Arbeitsspindeln jeweils eigene, autonome Antriebe aufweisen, durch die die Arbeitsspindeln jeweils unabhängig voneinander in beliebiger Weise ansteuerbar, bewegbar und positionierbar sind.

Bei allen vorgenannten Varianten ist es natürlich klar, dass die Arbeitsspindeln bzw. der Spindelstock schlittenartig ausgebildet und auf einer Führung bewegbar sind. Natürlich erlaubt diese prinzipielle Bewegbarkeit auch eine Positionierung der Arbeitsspindeln zum Beispiel für die Bearbeitung oder während der Bearbeitung.

Erfindungsgemäß wird auch vorgeschlagen, dass eine Werkzeugmagazinscheibe zwei Arbeitsspindeln mit Bearbeitungswerkzeugen versorgt. Gemäß der Erfindung ist somit vorgesehen, dass eine Werkzeugmagazinscheibe auch eine Gruppe von Arbeitsspindeln versorgt. Auf Grund der erfindungsgemäßen Leistung, dass nämlich eine hohe Dichte von Bearbeitungswerkzeugen vorgehalten werden kann, ist es mit der Erfindung nunmehr möglich, eben auch eine größere Anzahl von Bearbeitungsspindeln mit nur einer Werkzeugmagazinscheibe, zum Beispiel eine Werkzeugmagazinscheibe für eine Gruppe von zwei oder drei oder noch mehr Arbeitsspindeln, vorzusehen. Diese Einheit ist dann zum Beispiel in einer erfindungsgemäßen Werkzeugmaschine doppelt, symmetrisch vorgesehen. Die Flexibilität, aber auch die Effizienz einer solchen erfindungsgemäßen Werkzeugmaschine, steigt erheblich, wobei es hierbei gelingt, die ansonsten widerstrebenden Eigenschaften Effizienz und Flexibilität in der Erfindung geschickt miteinander zu koppeln. Die Erfindung erreicht eine hohe Zerspanleistung mit einer großen Anzahl von unterschiedlich einsetzbaren Bearbeitungswerkzeugen. Es hat sich dabei als günstig herausgebildet, dass die Werkzeugzangen auf der Werkzeugmagazinscheibe auf zwei oder mehreren Kreisen angeordnet sind. Durch eine solch geschickte Anordnung dieser, in der Regel auch konzentrischer Kreise (konzentrisch um die Rotationsachse) wird die Packungsdichte der Werkzeuge bzw. der Werkzeugzangen noch weiter gesteigert.

Günstigerweise wird bei einer weiteren Variante der Erfindung vorgeschlagen, dass die Werkzeugzangen eines Kreises einer speziellen Arbeitsspindel zugeordnet sind. Natürlich ist es möglich, die Bearbeitungsspindeln in der jeweiligen Spindelgruppe bzw. im Spindelstock so anzuordnen, dass sie für den Wechselprozess jeweils auf der gleichen Kreislinie angeordnet sind. Da aber durch die mehrreihige Anordnung der Werkzeugzangen die Anzahl der zur Verfügung stehenden Bearbeitungswerkzeuge erhöht werden kann, ist es günstig, die Anordnung der Arbeitsspindeln entsprechend zu wählen, wodurch dann zum Beispiel eine horizontale Anordnung der Bearbeitungsspindeln nebeneinander möglich ist. Die Erfindung erlaubt aber jedwede Variante hierzu.

Dabei ist insbesondere auch vorgesehen, dass die Werkzeugmagazinscheibe im Bereich einer innenliegenden und/oder auch außenliegenden Werkzeugzange eine Öffnung aufweist, durch welche das Bearbeitungswerkzeug hindurchgeführt wird, wenn es in oder aus der Werkzeugmagazinscheibe ge- oder entladen wird. Diese Öffnung ist dabei größer gewählt als die Aufnahme der Zange, und das Bearbeitungswerkzeug ist dabei im Wesentlichen parallel zur Rotationsachse bzw. Spindelachse zu bewegen, was aber zum Beispiel durch den sowieso vorgesehenen Pinolenantrieb der Werkzeugspindel in Z-Richtung oder einer separaten Z-Achse für die Werkzeugmagazinscheibe in einfacher Weise im Rahmen der Maschinensteuerung realisierbar ist.

Natürlich ist die Anordnung der Werkzeugzangen am Umfang der Werkzeugmagazinscheibe so gewählt, dass eine freie Zugänglichkeit des Bearbeitungswerkzeuges in die Zange gewährleistet ist, gegebenenfalls sind entsprechende Ausnehmungen oder Ausbuchtungen oder auch Bohrungen an der Werkzeugmagazinscheibe vorgesehen.

Ein wesentlich weiterer Vorteil der Erfindung liegt insbesondere darin, dass mit der Relativbewegung das gleichzeitige Wechseln der Bearbeitungswerkzeuge von zwei oder mehreren Arbeitsspindeln möglich ist. Erfindungsgemäß ist es vorgesehen, dass zumindest eine Werkzeugmagazinscheibe gleichzeitig die Bearbeitungswerkzeuge an mehreren Arbeitsspindeln wechselt. Neben einer hohen Dichte von Bearbeitungswerkzeugen, einer hohen Variabilität auf Grund einer großen Anzahl von Bearbeitungswerkzeugen, wird für den Werkzeugwechsel durch das gleichzeitige Wechseln wenig Zeit verbraucht.

Geschickterweise ist vorgesehen, dass die Relativbewegung im Raum zwischen den Zangenachsen der Werkzeugzangen orientiert ist, welche bezüglich der jeweiligen Arbeitsspindel in Werkzeugwechselposition sind. Das Herausnehmen oder Einlegen des Bearbeitungswerkzeuges in die Werkzeugzange erfolgt dabei, wie bereits erwähnt, entlang einer Linie, die mit der Linearbewegung einen spitzen Winkel bildet, jedoch sind die jeweiligen Abweichungen für die beteiligten, in der Regel benachbarten Werkzeugzangen gleich. Günstigerweise wird dabei die Winkelhalbierende des durch die jeweiligen zangenachsen aufgespannten Winkels für Relativbewegung eingesetzt.

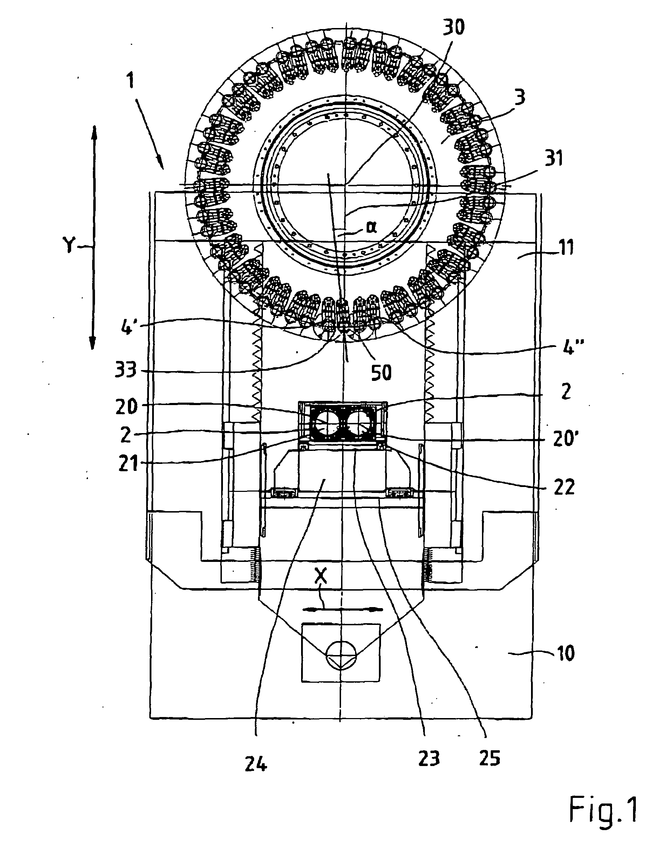

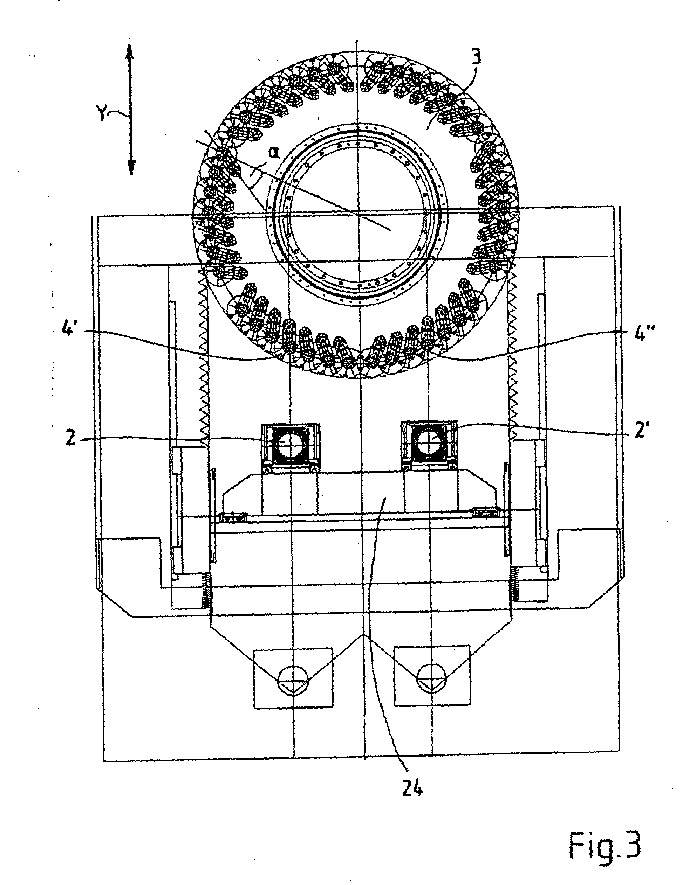

In einer weiteren erfindungsgemäßen Variante ist vorgesehen, dass die werkzeugmaschine nur eine Werkzeugmagazinscheibe aufweist, die mindestens zwei Arbeitsspindeln mit Bearbeitungswerkzeugen versorgt. Eine solche Ausgestaltung ist zum Beispiel in Fig. 1 oder Fig. 3 gezeigt. Hierbei bildet die zangenachse mit der Verbindungslinie zwischen der Rotationsachse, der Werkzeugmagazinscheibe und der Werkzeugachse des in der werkzeugzange ruhenden Bearbeitungswerkzeuges einen spitzen Winkel. Dieser spitze Winkel ist nicht störend, da insbesondere auch die Werkzeugzangen im hinteren Bereich sicher genügend ausgebildet sind und so einander nicht stören. Auch bei einem entsprechend kleinen Winkel α bleibt es nach der Erfindung möglich, eine hohe Anzahl von Bearbeitungswerkzeugen zur Verfügung zu stellen.

In einer weiteren Variante der Erfindung ist gefunden worden, dass der Durchmesser des Kreises, auf welchem die Werkzeugzangen angeordnet sind, groß ist gegenüber dem Abstand der Spindelachsen. Dieses Größenverhältnis ist bevorzugterweise größer als 5. Das bedeutet, der Durchmesser ist 5-mal größer als der Spindelachsenabstand. Erfindungsgemäß wird also eine verhältnismäßig große Werkzeugmagazinscheibe vorgeschlagen, die auf Grund des erheblichen Umfanges zusätzlich dazu dient, eine große Anzahl von Bearbeitungswerkzeugen aufzunehmen. Ein vorteilhaftes Intervall dieses Größenverhältnisses liegt zwischen 6 bis 12. Eine sehr gute Platzausnutzung wird erreicht, wenn der Durchmesser ungefähr 9 bis 10-mal in den Spindelabstand gesetzt wird, weil dann die gesamte Breite der Werkzeugmaschine optimal ausgenützt werden kann. Neben einer großen Anzahl von Bearbeitungswerkzeugen, die hier vorgesehen werden können, ist auch die Verkippung der einzelnen Werkzeugzangen bezüglich der Verbindungslinie von Rotationsachse und Werkzeugachse geringer. An dieser Stelle wird beispielhaft auch auf Fig. 1 verwiesen.

In einer weiteren bevorzugten Ausgestaltung der Erfindung wird vorgeschlagen, dass die Verbindungslinie der Werkzeugachsen zweier Bearbeitungswerkzeuge, die in den jeweiligen Werkzeugzangen angeordnet sind, und die geeignet sind, dass diese gleichzeitig in die Arbeitsspindeln einwechselbar sind, rechtwinklig zur Zangenachse der jeweiligen Werkzeugzange ist. Durch die Linearbewegung der Werkzeugmagazinscheibe wird idealerweise für eine Mehrzahl von Werkzeugzangen der Entnahme- oder Einwechselprozess des Werkzeuges hierdurch ermöglicht. Es ergeben sich hieraus auch mehrere Möglichkeiten, die Bearbeitungswerkzeuge anzuordnen. Zum Beispiel können diese in einer Abfolge wie folgt angeordnet sein: ababcdcdefef, wobei die gleichen Buchstaben jeweils Bearbeitungswerkzeuge unterschiedliche Spindeln betreffen, die auf der Werkzeugmagazinscheibe angeordnet sind und jeweils gleichzeitig ein- bzw. ausgewechselt werden. Die vorgestellte Ausgestaltung erlaubt es dabei, die beiden Spindeln verhältnismäßig nah nebeneinander, in engem Abstand anzuordnen (siehe Fig. 1).

Alternativ ist eine Anordnung wie abcdefgh abcdefgh möglich, wobei der mittlere Abstand zwischen den jeweils zusammengehörenden werkzeugpaaren deutlich größer ist. Hieraus resultiert auch ein größerer Abstand zwischen den beiden Spindelachsen. Hier sei ergänzend noch auf Fig. 3 hingewiesen.

Die Anordnung ist dabei gemäß der Erfindung so gewählt, dass der Abstand der Spindelachsen so gewählt ist, dass auf der Werkzeugmagazinscheibe zwischen den jeweils für einen Werkzeugwechselprozess zur Verfügung stehenden werkzeugzangen eine oder mehrere andere werkzeugzangen angeordnet sind. Hierdurch wird der auf der Werkzeugmagazinscheibe zur Verfügung stehende Platz, bezogen auf die vorhandenen Arbeitsspindeln, optimal eingesetzt.

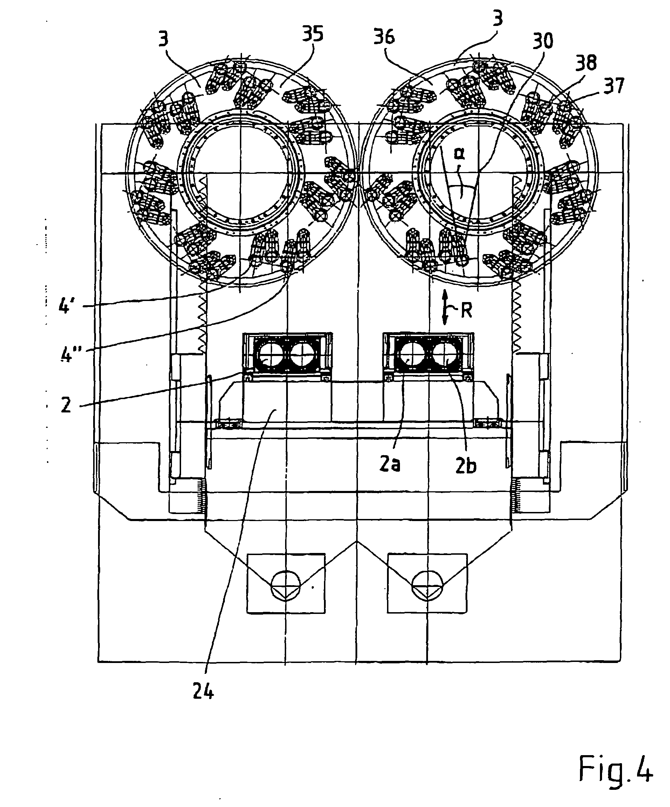

In einer weiteren Variante der Erfindung ist vorgesehen, dass die Werkzeugmaschine zwei Werkzeugmagazinscheiben aufweist und eine erste Werkzeugmagasinscheibe für eine erste Gruppe von mehreren Arbeitsspindeln vorgesehen und eine zweite Werkzeugmaschinenscheibe für eine zweite Gruppe von mehreren Arbeitsspindeln vorgesehen ist und die Werkzeugzangen auf den Werkzeugmagazinscheiben auf unterschiedlichen Kreisen angeordnet sind und die Zangenachse mit der Verbindungslinie zwischen der Rotationsachse der Werkzeugmagazinscheibe und der Werkzeugachse des in der Werkzeugzange ruhenden Bearbeitungswerkzeuges einen spitzen Winkel einschließt. Diese erfindungsgemäße Variante ist zum Beispiel in Fig. 4 gezeigt. Dieser Vorschlag realisiert eine Anordnung der Werkzeugzangen auf den Werkzeugmagazinscheiben in zwei oder mehreren Kreisen. Hieraus läßt sich prinzipiell eine größere Anzahl von Werkzeugen unterbringen. Auf die besonderen Vorteile dieses Merkmales wird Bezug genommen. Des weiteren ergibt sich bei dieser Ausgestaltung auch, dass die Verbindungslinie der Werkzeugzangen zweier Bearbeitungswerkzeuge, die in den jeweiligen werkzeugzangen angeordnet sind und die geeignet sind das diese gleichzeitig in die Arbeitsspindeln einwechselbar sind, rechtwinkelig zu der Zangenachsen der jeweiligen Werkzeugzangen ist. Die Ausgestaltung erlaubt ein sehr einfaches Einwechseln, da die Relativbewegung von der Linearbewegung der Werkzeugmagazinscheibe ableitbar ist.

Aus der Figur ist gut zu entnehmen, dass der Abstand der beiden Spindelstöcke geringer ist, als der Abstand der jeweilige Rotationsachsen der Werkzeugmagazinscheiben. Die etwas verkippte Anordnung der Zangenachsen erlaubt es, in einer Linearbewegung der beiden Werkzeugmagazinscheiben die Werkzeuge an insgesamt vier relativ eng zueinander orientierten Spindeln zu wechseln. Der Zeitvorteil bei dem Wechselprozeß ist erheblich.

Es ist günstig, dass die Spindelachse parallel zur Rotationsachse orientiert ist. Hierdurch werden verhältnismäßig einfache geometrische Verhältnisse erhalten. Gleiches gilt auch für Anordnung gemäß einer weiteren Variante der Erfindung, wonach die Werkzeugachse des in der Werkzeugzange,gehaltenen Bearbeitungswerkzeuges parallel zur Rotationsachse ist.

In den noch zu diskutierenden Ausführungsbeispielen ist gezeigt, dass die Werkzeugmagazinscheiben an dem Maschinenständer angeordnet sind, die auch die Arbeitsspindeln tragen. Natürlich ist auch eine andere Ausgestaltung möglich, nämlich derart, dass diese von einem hierzu in Opposition befindlichen, also gegenüberliegenden Ständer gehalten sind. Auch kann in einer Variante vorgesehen sein, dass die Werkzeugmagazinscheiben unter die Arbeitsspindeln in eine Warteposition abtauchen. Es ist aber von Vorteil, wenn die Werkzeugmagazinscheiben, wie in einer weiteren erfindungsgemäßen Variante vorgesehen, über den Arbeitsspindeln angeordnet sind, da dadurch deren Zugänglichkeit verbessert ist.

In einem weiteren Aspekt der Erfindung ist gefunden worden, dass sich die Dichte von Bearbeitungswerkzeugen in dem Werkzeugmagazin der Werkzeugmaschine nach der Erfindung insbesondere durch eine vorteilhafte Ausgestaltung der Werkzeugzangen erhöhen läßt.

Bekannte Werkzeugzangen sind derart ausgebildet, dass diese zumindest eine halbkreisartig gebogene Anlagesichel aufweisen, die mit dem aufzunehmenden Bearbeitungswerkzeug in dessen rotationssymmetrischen Schaftbereich zusammenwirkt und die Werkzeugzange des weiteren eine Haltevorrichtung für das Festhalten des Bearbeitungswerkzeuges aufweist. Um die erfindungsgemäße Aufgabe zu lösen, nämlich eine möglichst hohe Werkzeugdichte in den Werkzeugmagazinen bzw. Magazinscheiben zu erreichen, wird vorgeschlagen, dass die Endbereiche der Anlagesichel bezüglich des Halbkreises des Schaftes zurückstehen. Diese einzig mögliche Be- und Entladerichtung entspricht dabei gleichzeitig der Orientierung der Zangenachse bei diesen bekannten Werkzeugzangen.

Bekannte Anlagesicheln umschließen in einem Winkelbereich von 180° eine Aufnahmeöffnung, in welcher die Hälfte des Schaftbereiches des Bearbeitungswerkzeuges eintaucht. Hieraus resultiert eine einzige Richtung, in welche die Werkzeugzangen mit den Bearbeitungswerkzeugen be- bzw. entladen werden können, nämlich rechtwinkelig zu diesem Durchmesser. Um Bearbeitungswerkzeuge auch in komplizierten Arbeitsspindelanordnungen anbieten zu können, würde eine solche Ausgestaltung behindern bzw. ein Verdrehen der bekannten werkzeugzangen um einen großen Winkel erforderlich machen.

Steht aber nun gemäß dieser erfindungsgemäßen Lösung der Endbereich der Anlagesichel zurück, so ergibt sich eine Vielzahl von unterschiedlichen Richtungen, wie die Werkzeugzange be- und entladen werden kann. Anstelle einer festen Richtung, die mit der Zangenachse zusammenfällt, eröffnet sich ein ganzes Winkelfeld, jeweils in Abhängigkeit der Ausgestaltung des Endbereiches der Anlagesichel, in welchem die Werkzeugzange zuverlässig be- und entladen werden kann.

Dabei bietet dieser Vorschlag nicht nur den Vorteil bei der Kompensation von unterschiedlichen Richtungen der Relativbewegungen. Gleichzeitig erlaubt diese Anordnung auch einen Fehlerausgleich, damit es auf die exakte Führung und Positionierung der Bearbeitungswerkzeuge hierbei nicht mehr ankommt. Die erfindungsgemäße Anordnung erlaubt daher, in diesem Bereich einen geringen Aufwand zu treiben, da die Anordnung Fertigungstoleranzen auszugleichen vermag, ohne dabei die Praktikabilität in Frage zu stellen.

In einer bevorzugten Ausgestaltung der Erfindung ist es vorgesehen, dass die Haltevorrichtung als Haltesichel ausgebildet ist und die Haltesichel am Schaft anliegt. Die Haltevorrichtung wird in der Regel dann eingesetzt, wenn das Bearbeitungswerkzeug in der werkzeugzange zu halten ist. Die Haltevorrichtung kann dabei als mechanisch wirkende Klappe ausgebildet sein, wobei diese dann die Ausgestaltung einer Haltesichel aufweist oder aber sie kann in einer anderen Variante der Erfindung zum Beispiel als magnetisch wirkende Anordnung oder mit Arretierbolzen und dergleichen ausgebildet sein.

Eine bevorzugte Variante der Erfindung sieht vor, dass an dem Endbereich der Haltesichel Haltenasen vorgesehen sind, die in einer am Bearbeitungswerkzeug vorgesehenen Ausnehmung haltend eingreifen. Eine solche Anordnung ist mechanisch gut beherrschbar und mit geringem Aufwand verbunden.

Um die große Variabilität in der Orientierung der Relativbewegung nicht zu beschränken, ist es günstig, dass die Endbereiche der Haltesichel bezüglich des Halbkreises des Schaftes zurückstehen. Dieser Vorschlag folgt im Prinzip der gleichen Idee wie die Anordnung der Anlagesichel. Dabei ist es günstig, dass die Ausnehmung am Bearbeitungswerkzeug eine entsprechende Ausdehnung aufweist, um trotzdem sicherzustellen, dass die Haltenase des Endbereiches auch beim zurückstehenden Endbereich der Haltesichel zuverlässig dort eingreift.

Es ist weiter von Vorteil, wenn die Haltesichel um eine Klappachse klappbar, insbesondere als federunterstützte klappbare Haltesichel ausgebildet ist. Eine solche Ausgestaltung ist mechanisch sehr zuverlässig und einfach herstellbar.

In einer weiteren Ausgestaltung der Erfindung ist vorgesehen, dass an der Anlagesichel ein insbesondere abgeflachter Orientierungsstift vorgesehen ist, der mit einer Orientierungskerbe des Bearbeitungswerkzeuges zusammenwirkt. Die Anordnung eines orientierungsstiftes in einer Orientierungskerbe dient als Verdrehschutz, um sicherzustellen, dass das Bearbeitungswerkzeug richtig orientiert, insbesondere bezüglich einer Punkt- oder Spiegelsymmetrie, von der Werkzeugzange gehalten ist.

Die Abflachung des Orientierungsstiftes trägt dem großen Feld der möglichen Richtungen der Relativbewegung Rechnung und behindert diese nicht.

Es ist von Vorteil, wenn die Anlagesichel bzw. die Haltesichel einen Winkelbereich von 40° bis 170°, bevorzugt 120° bis 160°, insbesondere von 135° bis 145°, überdeckt. Je nachdem, wie dieser Winkelbereich, an welchem das Bearbeitungswerkzeug an der Anlagesichel anliegt, ausgestaltet ist, bestimmt sich letztendlich der Winkelbereich, unter welchem das Bearbeitungswerkzeug in die Werkzeugzange be- oder entladen werden kann. Günstigerweise wird dabei eine symmetrische Ausgestaltung angestrebt, wodurch sich das Zurückstehen der jeweiligen Endbereiche gleich verteilt und pro Seite zwischen 5° und 70° betragen kann. Gute Ergebnisse wurden bei einem Winkel von ca. 10° bis 30°, insbesondere bei ca. 20°, erreicht, da hier auf der einen Seite eine gute Befestigungsmöglichkeit realisierbar ist und auf der anderen Seite eine hohe Variabilität für die Richtung zum Be- und Entladen der Werkzeugzange zur Verfügung steht. Wie ausgeführt, besitzt auch die Haltesichel in einer Variante eine sinngemäße Ausgestaltung, wobei diese nicht zwingend der Ausgestaltung der Anlagesichel folgen muß, sondern alternativ anzusehen ist. Insbesondere ist es möglich, eine klappbare Haltesichel so auszugestalten, dass diese von der Ausgestaltung der Anlagesichel abweicht, dieses aber nicht stört, da die Haltesichel beim Be- und Entladeprozeß weggeklappt ist.

Für die Ausgestaltung der Endbereiche der Haltesichel sind verschiedene Varianten vorgesehen. Die Endbereiche können zum Beispiel abrupt enden oder aber, wie in einer weiteren erfindungsgemäßen Variante ausgeführt, tangential zur Werkzeugachse eines in der Werkzeugzange gehaltenen Bearbeitungswerkzeuges auslaufen. Bei einer solchen Ausgestaltung würde diese Tangente auf einem gewissen Bereich führend das Ein- oder Ausführen des Bearbeitungswerkzeuges in die Werkzeugzange unterstützen.

In diesem Zusammenhang gehört es auch zur Erfindung, dass natürlich diese Tangente bis über den Halbkreis hinaus ausführbar ist. Da aber dieser tangential abstehende Bereich nicht mehr mit dem Schaft des Bearbeitungswerkzeuges zusammenführt, wenn dieses von der Zange gehalten ist, ist diese Lösung gleichwirkend mit der Anordnung beschrieben, wo der Anlagebereich der Anlagesichel zurücksteht und daher keine Anlagemöglichkeit mehr bietet.

Die Erfindung ist in der Zeichnung schematisch dargestellt. Es zeigen
- Fig. 1,3,4 und 7-8: jeweils Frontansichten verschiedener varianten der erfindungsgemäßen Werkzeugmaschine,
- Fig. 2 und 5-6: von der Erfindung nicht umfasste Werkzeugmaschinen und
- Fig. 9: eine Draufsicht auf eine Werkzeugzange für eine Werkzeugmaschine, gemäß der Erfindung.

In Fig. 1 ist eine erste Variante der erfindungsgemäßen Werkzeugmaschine 1 gezeigt. Die Werkzeugmaschine 1 ist gebildet von einem Maschinenbett 10, an dem sich nach oben hin der Maschinenständer 11 erstreckt. Auf dem Maschinenbett 10 ruhen die Arbeitsspindeln 2. In dem hier gezeigten Ausführungsbeispiel sind zwei Arbeitsspindeln, eine erste Arbeitsspindel 21 und eine zweite Spindel 22 angedeutet. Die beiden Spindeln 21, 22 sind in einem Spindelstock 23 eingebettet und durch die Schlitten 24 auf der Führungsbahn 25 in X-Richtung verschiebbar.

Mit 20 ist die Spindelachse der Arbeitsspindel 2 gekennzeichnet.

In dem hier gezeigten Ausführungsbeispiel ist eine Werkzeugmagazinscheibe 3 vorgesehen, die über der Arbeitsspindel 2 angeordnet ist.

Von Vorteil ist es, daß die Werkzeugmagazinscheibe 3 entlang der gezeichneten Y-Achse, hier vertikal verschiebbar, ausgebildet ist. Damit kann eine entsprechend aufwendige Kreuzschlittenführung in der Arbeitsspindel eingespart werden. Um die Y-Bewegung der Werkzeugmagazinscheibe zu erreichen, ist eine Führung vorgesehen, und die Werkzeugmagazinscheibe 3 ist in der Lage, auf dieser entsprechend bewegt und positioniert zu werden. Hieraus ergibt sich, daß die werkzeugmagazinscheibe 3 über den Arbeitsspindeln 2 angeordnet ist und die Relativbewegung für das Ein- und Auswechseln der Bearbeitungswerkzeuge 5 von dieser Linearbewegung abgeleitet ist.

Auf der Werkzeugmagazinscheibe sitzen eine Vielzahl von hier als Paare gruppierten Werkzeugzangen 4. Diese Werkzeugzangen 4 sind im Wesentlichen radial zur Rotationsachse 30 der Werkzeugmagazinscheibe 3 orientiert. Die Zangenachse 40 der Werkzeugzange 4 weist einen gewissen Verkippungswinkel α auf. Dieser Verkippungswinkel α erstreckt sich einerseits zwischen der zangenachse 40 und auf der anderen Seite bis zur Verbindungslinie zwischen der Rotationsachse 30, der Werkzeugmagazinscheibe 3 und der Werkzeugachse 50 des in der Werkzeugzange 4 ruhenden Bearbeitungswerkzeuges.

Es ist jeweils gut die große Anzahl von Werkzeugzangen zu sehen, die für das Einwechseln zur Verfügung stehen. Die Anordnung ist dabei so getroffen, daß die verbindungslinie 33 der Werkzeugachsen zweier Bearbeitungswerkzeuge, die in den jeweiligen Werkzeugzangen 4' und 4'' angeordnet sind, rechtwinklig zu den jeweiligen Zangenachsen der jeweiligen Werkzeugzangen 4', 4'' sind. In diesem Fall der Anordnung ist die Zangenachse 40 parallel zu der Bewegungsrichtung Y der Werkzeugmagazinscheibe. Es ist auch gut zu erkennen, daß der Abstand der Werkzeugachsen in den beteiligten Wekzeugzangen 4', 4' ' gerade dem Abstand der Spindelachsen 20, 20' entspricht.

In einer bevorzugten Ausgestaltung der Erfindung ist vorgesehen, daß der Winkel α zwischen der Zangenachse und der Verbindungslinie Rotationsachse 30 - Werkzeugachse 50 spitz, insbesondere in einem Intervall von 0,1° bis 35°, bevorzugt in dem Intervall von 5° bis 35° liegt. Zum Beispiel zeigen Fig. 1, Fig. 3, Fig. 4 verschiedene Varianten, wie dieser spitze Winkel realisiert ist. In allen Fällen ist es aber möglich, eine große Anzahl von Werkzeugzangen auf der Werkzeugmagazinscheibe 3 anzuordnen.

Im Gegensatz zu der Ausgestaltung in Fig. 1 ist in Fig. 3 der Verkippungswinkel α größer und auch unterschiedlich. Dies rührt letztendlich daher, daß in der in Fig. 3 gezeigten erfindungsgemäßen Variante mit einer Werkzeugmagazinscheibe zwei Spindeln 2, 2' mit größerem Abstand zu versorgen sind.

Wiederum sind die beiden Spindeln 2, 2' auf einem gemeinsamen Schlitten 24 verfahrbar. Da aber der Abstand zwischen den beiden Spindeln 2, 2' deutlich größer ist, ist es möglich, eine größere Anzahl von weiteren Bearbeitungswerkzeugen zwischen den parallel orientierten Werkzeugzangen 4', 4'' anzuordnen. Letztendlich ist die Werkzeugmagazinscheibe 3 so zu positionieren wie sie jetzt in Fig. 3 gezeigt ist, nämlich das jeweilig ausgewählte Werkzeugpaar ist exakt oberhalb der jeweiligen Spindeln zu positionieren, um dann nach einem Absenken der Bearbeitungsscheibe 3 entlang der Richtung Y durch eine Relativbewegung das Werkzeug ein- beziehungsweise auszuwechseln.

Da der Aufbau der verschiedenen Werkzeugmaschinen gemäß den in den verschiedenen Figuren dargestellten Varianten im Wesentlichen immer gleich ist, wird nachfolgend auf eine Wiederholung der jeweils gleichen Bauteile verzichtet. Vielmehr werden die wesentlichen Unterschiede herausgearbeitet.

In Fig. 4 ist eine weitere Variante der Erfindung gezeigt. In dem hier gezeigten Ausführungsbeispiel sind zweimal zwei Spindeln 2 vorgesehen. Die Maschine ist im Wesentlichen symmetrisch aufgebaut. Die insgesamt vier Spindeln (man spricht auch von Vier-Spindel-Maschine) sind in zwei Spindelgruppen a zwei Arbeitsspindeln 2 zusammengefaßt.

Die vier Spindeln beziehungsweise die zwei Spindelgruppen mit je zwei Arbeitsspindeln befinden sich auf einem gemeinsamen Schlitten 24 und sind wiederum in X-Richtung bewegbar.

Bei dieser Ausgestaltung ist vorgesehen, daß zwei Werkzeugmagazinscheiben 3 vorgesehen sind. Die linke ist mit 35 die rechte Werkzeugmagazinscheibe mit dem Bezugszeichen 36 gekennzeichnet. Die linke Spindelgruppe ist dabei der Werkzeugmagazinscheibe 35, die rechte der werkzeugmagazinscheibe 36 zugeordnet.

Die beiden Werkzeugmagazinscheiben 35, 36 sind mittels einer oder zwei Führungen vertikal verschiebbar. Dadurch werden die werkzeugmagazinscheiben 35, 36 gegen die Arbeitsspindeln 2 angestellt. Dabei werden bei einem Wechselprozeß insgesamt bis zu 4 Werkzeuge ein- beziehungsweise ausgewechselt.

Um dies zu erreichen, sind die jeweils zusammenwirkenden Werkzeugzangenpaare 4, 4', ähnlich wie in der Lösung nach Fig. 3, parallel zueinander orientiert.

Da zwei Arbeitsspindeln 2 gleichzeitig mit Werkzeugen zu versorgen sind, befinden sich letztendlich die Werkzeugzangen 4 auf zwei unterschiedlichen Kreisen 37, 38. Die Kreise 37, 38 sind dabei konzentrisch um die Rotationsachse 30 angeordnet. Die Anordnung ist dabei so gewählt, daß der äußere Kreis 37 die Werkzeugzangen 4 vorhält, die für die Spindel 2a bestimmt sind, die einen größeren Abstand zur Rotationsachse 30 aufweist als die danebenliegende Spindel 2b. Die Spindel 2b wird von den Werkzeugzangen des inneren Kreises 38 mit Bearbeitungswerkzeugen versorgt. Diese Anordnung ist prinzipiell natürlich auch auf Anordnungen ausdehnbar, bei denen an Stelle von zwei Spindeln pro Spindelgruppe drei, vier oder noch mehr Spindeln vorgesehen sind.

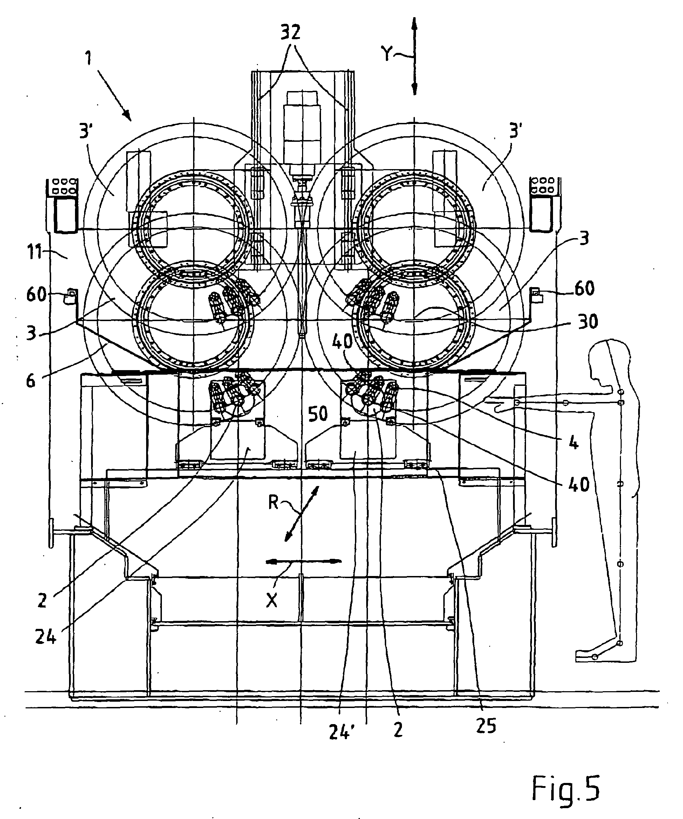

War in den Figuren 1 bis 4 die Relativbewegung R parallel mit der Linearbewegung Y des jeweiligen Scheibenmagazins, so sind die Verhältnisse in der Variante nach Fig. 5 anders.

In dem in Fig. 5 gezeigten nicht erfindungsgemäßen Beispiel sind zwei Werkzeugmagazinscheiben 3 vorgesehen, wobei diese in zwei verschiedenen Positionen gezeigt sind, wobei die in der warteposition befindliche Anordnung mit 3' gekennzeichnet ist und die Position, bei welcher die Werkzeugmagazinscheibe in der unteren Werkzeugwechselposition ist, mit 3. Um die Werkzeugmagazinscheibe 3 zu positionieren, befindet sich die Werkzeugmagazinscheibe 3 je auf einer Führung 32. Die Werkzeugmagazinscheiben sind gemeinsam oder unabhängig voneinander positionierbar. In dem hier gezeigten Beispiel ist einer Werkzeugmagazinscheibe 3 jeweils nur eine Arbeitsspindel 2 zugeordnet. Daher befinden sich alle hierfür notwendigen Werkzeuge beziehungsweise Werkzeugzangen auf einem konzentrischen Kreis.

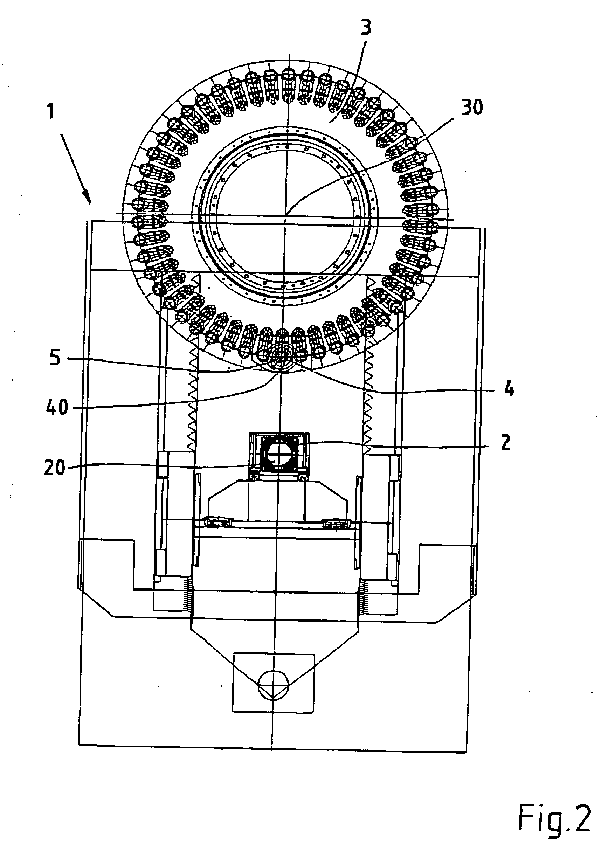

Entgegen zum Beispiel der Ausgestaltung nach Fig. 2, bei welcher die Rotationsachse 30 die Werkzeugachse 40 und die Spindelachse 20 eine Gerade bilden, die vertikal verläuft und auch parallel zur Linearbewegung der Werkzeugmagazinscheibe ist, besteht hier ein Winkel zwischen diesen beiden Orientierungen.

Anders gesprochen, die Relativbewegung R ist nicht parallel mit der Linearbewegung Y, mit deren Hilfe vorher in den Varianten nach Fig. 1 bis 4 die Relativbewegung R abgeleitet wurde.

Dies kommt dadurch zustande, daß die Arbeitsspindeln 2 nicht mehr unterhalb der Rotationsachse 30 positioniert sind, sondern jeweils zum Maschineninneren hin.

In einer erfindungsgemäßen Variante wird aber nun vorgeschlagen, daß die Relativbewegung aus einer Überlagerung von mindestens zwei Bewegungen, zum Beispiel der Werkzeugmagazinscheibe 3 und der Arbeitsspindel 2 resultiert. In dem hier gezeigten Ausführungsbeispiel sitzen die Spindeln 2 jeweils auf eigenen Schlitten 24, 24' und sind auf der Führungsbahn 25 in X-Richtung bewegbar. Hierzu rechtwinklig verläuft die Linearbewegung Y der Werkzeugmagazinscheibe 3. Bei geschickter Überlagerung dieser beiden Bewegungen resultiert eine Relativbewegung R wie angedeutet. Das heißt, die Zangenachse 40 ist wiederum parallel zu dieser Relativbewegung R, obwohl keine Bewegungskomponente parallel zu der Relativbewegung R angeboten wird. Dadurch ist es möglich, in einfacher Weise und insbesondere unter doppelter Ausnutzung von bereits vorhandenen Elementen, Arbeitsspindeln 2 eng zu positionieren und trotzdem eine große Anzahl von Bearbeitungswerkzeugen 5 in den jeweiligen Werkzeugmagazinscheiben zur Verfügung zu stellen.

Ähnlich wie in Fig. 5 zeigt auch Fig. 6 eine nicht erfindungsgemäße Anordnung, bei welcher zwei Werkzeugmagazinscheiben 3 (wieder in zwei Positionen gezeigt) nur zwei Arbeitsspindeln 2 mit Werkzeugen versorgen. Hier aber ist die Linearbewegung Y wieder parallel zur Relativbewegung R. Hieraus resultiert aber eine V-artige Ausgestaltung der Führungsbahnen beziehungsweise die jeweiligen Linearbewegungen Y und Y' der linken und rechten werkzeugmagazinscheibe 3. Diese schneiden sich unter einem spitzen Winkel β. Eine Überlagerung der Bewegungen ist nicht notwendig, daher sind die Spindeln 2 wieder auf einem gemeinsamen Schlitten 24 angeordnet.

In einer vorteilhaften Ausgestaltung der Erfindung ist vorgesehen, daß die Arbeitsspindeln 2 im Bearbeitungsraum der Werkzeugmaschine angeordnet sind und eine Werkzeugmagazintüre 6 vorgesehen ist, die für den Werkzeugwechselprozeß öffenbar ist, um die Werkzeugmagazinscheibe oder -scheiben in den Bereich der Arbeitsspindel/n 2 zu bringen. Hierzu sind zwei varianten in Fig. 5 beziehungsweise Fig. 6 gezeigt. In Fig. 5 ist gezeigt, daß die Werkzeugmagazintüre 6 hängend, insbesondere an dem Maschinenständer 11 verschiebbar angeordnet ist. Hierzu dient die Führungsschiene 60. In Fig. 6 ist hingegen die andere Variante gezeigt, bei welcher die Werkzeugmagazintüre portalartig, sich auf dem Maschinentisch 10 abstützend ausgebildet ist. Hierzu sind auf dem Maschinentisch 10 gegebenenfalls Führungsschienen 61 vorgesehen. Die Ausgestaltung der Werkzeugmagazintüre 6 in Fig. 5 ist rinnenartig, die in Fig. 6 portalartig, die Spindeln übergreifend.

Um die Werkzeugmagazintüren 6 nicht zu groß und damit zu unhandlich zu gestalten, wird in einer weiteren erfindungsgemäßen Variante vorgesehen, daß die Werkzeugmagazintüre 6 teleskopartig aus mehreren Türelementen besteht, die aber wiederum hängend oder abstützend bewegbar ausgebildet sind.

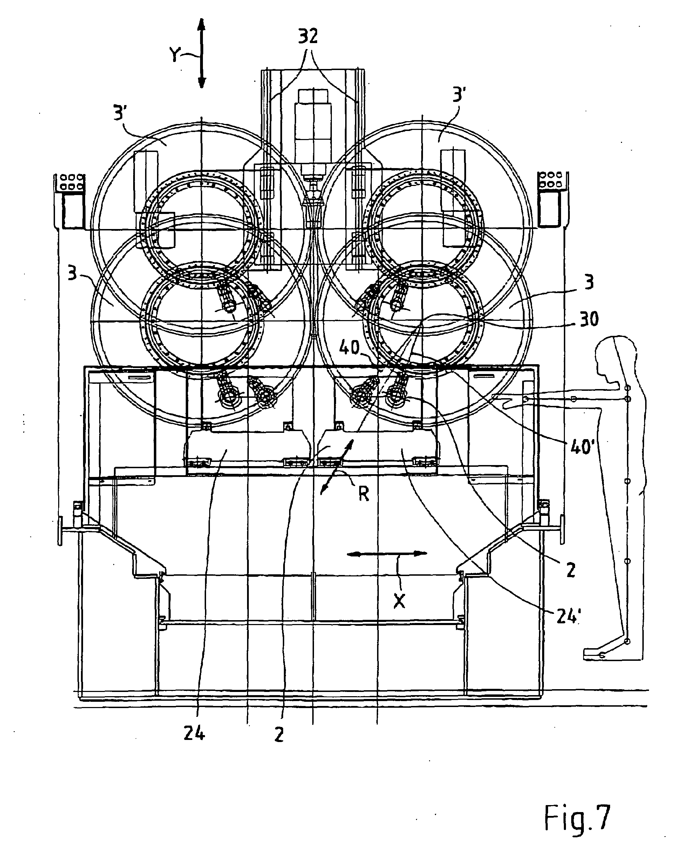

Die in Fig. 7 gezeigte Situation ist mit der in Fig. 5 bereits vorgestellten Variante ähnlich. Auch hier werden zur vermeidung von wiederholungen nur die Unterschiede herausgearbeitet. Im Gegensatz zu der Lösung nach Fig. 5 sind hier zwei Spindelgruppen à zwei Spindeln vorgesehen, die durch je eine Werkzeugmagazinscheibe 3 mit Bearbeitungswerkzeugen zu versorgen sind.

Mittig zwischen den beiden werkzeugmagazinscheiben ist ein zentraler Linearantrieb vorgesehen, der die Linearbewegung in Y-Richtung (hier vertikal) ermöglicht. Für jede Spindelgruppe ist wiederum ein eigener Schlitten 24, 24' vorgesehen.

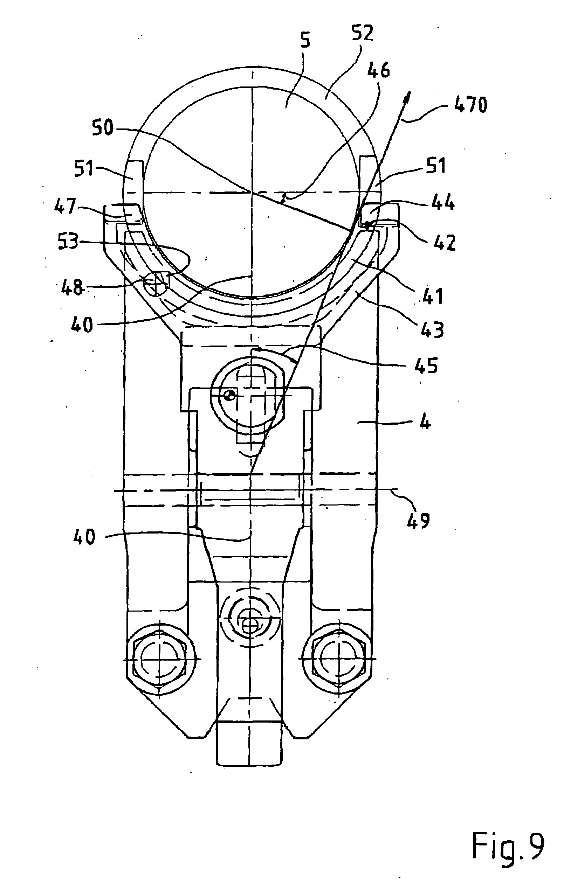

Es ergibt sich nun, daß die Zangenachse 40, die ja radial zur Rotationsachse 30 orientiert sind, in der in Fig. 7 gezeigten Ausführungsform, nicht mehr parallel zur Relativbewegung R ist. Vielmehr ist die Relativbewegung R so orientiert, daß sie zwischen zwei Zangenachsen 40, 40' zum Beispiel als Winkelhalbierende verläuft. Letztendlich werden die Werkzeuge unter einem gewissen Fehlwinkel gleichzeitig an den Spindeln 2 einer Spindelgruppe in die werkzeugzangen 4 be- oder entladen und es muß Vorsorge getroffen werden, um diesen Fehlwinkel, also die Abweichung der Orientierung der Relativbewegung R bezüglich der Zangenachse 40, 40' zu kompensieren. Hierzu dient eine spezielle Ausgestaltung an der Werkzeugzange 5, die insbesondere bei Fig. 9 zu diskutieren ist.

Um aus den rechtwinklig zueinander orientierten Linearbewegungen Y und der Spindelbewegungen X wieder die Relativbewegung R zu erreichen, die hierzu schräg verläuft, werden diese beiden Bewegungskomponenten in geschickter Weise überlagert. Der trotzdem verbleibende Fehlwinkel ist durch die Winkelhalbierende als Richtung der Relativbewegung gering und gleichartig.

In einer weiteren, erfindungsgemäßen Variante wird vorgeschlagen, die Relativbewegung R durch die Überlagerung der Linearbewegung Y und einer Rotationsbewegung der Werkzeugmagazinscheibe 3 auszuführen, um deren Rotationsachse 30 zu erreichen. Auch hierdurch entsteht, bezogen auf die relevanten Punkte, nämlich den betroffenen Werkzeugzangen 40, 40', eine zur Linearbewegung Y orthogonale Bewegungskomponente, die in geschickter weise so kombiniert werden kann, daß die schräg orientierte Relativbewegung R entsteht. Es ist gut zu erkennen, daß durch eine solche Anordnung ein verhältnismäßig enger Abstand entweder der einzelnen spindeln oder auch der Spindelgruppen auf deren unabhängigen Schlitten 24, 24' möglich ist. In geschickter Weise wird der Zwischenraum zwischen den beiden werkzeugmagazinscheiben 3 ausgenützt. Letztendlich resultiert dies zu einer geringeren Baubreite der erfindungsgemäßen werkzeugmaschinen.

So wie die Anordnungen von Fig. 7 und 5 sehr ähnlich sind, so ist auch die Anordnung von Fig. 6 und 8 verhältnismäßig ähnlich. Bei Fig. 8 sind wiederum die Linearbewegungen Y, Y' der beiden Werkzeugmagazinscheiben V-förmig aufeinanderzu gerichtet. Sie schneiden einander unterhalb der jeweiligen Werkzeugmagazinscheiben unter dem Winkel β. Wiederum besteht zwischen der Verbindungslinie der Spindelachse 20 der Arbeitsspindel 2 und der Rotationsachse 30 ein Fehlwinkel σ. Dieser Fehlwinkel wird durch die vorteilhafte Ausgestaltung der Werkzeugzange kompensiert. Wie in Fig. 6 ist auch in Fig. 8 die Relativbewegung R von der Linearbewegung Y abgeleitet.

In Fig. 9 ist die ebenfalls zur Werkzeugmaschine nach der Erfindung zählende Werkzeugzange gezeigt. Die Werkzeugzange 4 besitzt eine gebogene Anlagesichel 41, die mit dem aufzunehmenden Bearbeitungswerkzeug 5 in dessen rotationssymmetrischen Schaftbereich 52 zusammenwirkt. Die Werkzeugzange 4 weist des Weiteren eine Haltevorrichtung auf, die sicherstellt, daß das Bearbeitungswerkzeug nicht aus der Werkzeugzange herausfällt. Die Haltevorrichtung ist in dem hier gezeigten Ausführungsbeispiel als Haltesichel 43 ausgebildet. In der gewählten Ansicht wird die Anlagesichel 41 von der Haltesichel 43 verdeckt. Daher ist die Anlagesichel 41 gestrichelt gezeigt.

Um zu erreichen, daß das Ein- und Auswechseln der Werkzeuge, insbesondere in den Ausgestaltungen nach Fig. 7 und 8 problemlos erfolgt, muß dem Winkel zwischen der Relativbewegung R und der Zangenachse 40 Rechnung getragen werden. Bei den bekannten Werkzeugzangen wurde das Werkzeug in der Zange parallel zu der Werkzeugachse 40 geladen oder entnommen. Um diesen "Fehler" zu kompensieren wird erfindungsgemäß vorgeschlagen, daß die Endbereiche 42 der Anlagesichel bezüglich des Halbkreises des Schaftes 52 zurückstehen. Dieses anguläre Zurückstehen ist mit der Bezugsziffer 46 angedeutet. Er beträgt in diesem Ausführungsbeispiel ca. 20°.

Des Weiteren sieht die Erfindung vor, daß die Haltevorrichtung als Haltesichel 43 ausgebildet ist und auch die Haltesichel 43 am Schaft 52 anliegt.

Das Bearbeitungswerkzeug 5 besitzt diametral angeordnete Ausnehmungen 51, in die Haltenasen 47, die an den Endbereichen 44 der Haltesichel 43 vorgesehen sind, haltend eingreifen.

Auch die Endbereiche 44 der Haltesichel 43 stehen bezüglich des Halbkreises des Schaftes 52 zurück. Dieser Rückstand entspricht dem gleichen angulären Rückstand 46 wie für den Endbereich 42 der Anlagesichel 41. Zusätzlich ist aber in der Erfindung auch vorgesehen, daß die Endbereiche der Haltesichel 43 tangential 47 zur Werkzeugachse 50 des in der Werkzeugzange gehaltenen Bearbeitungswerkzeuges 5 ausläuft. Die Orientierung dieser Tangente 470 ist in der Darstellung in Fig. 9 derart verlängert, bis diese die Zangenachse 40 schneidet. Mit 45 ist der zwischen der Tangente 470 und der Zangenachse 40 bestehenden Fehlwinkel 45 gekennzeichet. Bis unter diesen Fehlwinkel 45 können durch die erfindungsgemäße Werkzeugzange problemlos Werzeuge ein- oder ausgefördert werden. Die Verwendung dieser Werkzeugzange in den Anordnungen nach Fig. 7 und 8 erlauben es daher, die dort resultierenden Fehlwinkel zu kompensieren und ein sicheres, effektives und schnelles Wechseln der Bearbeitungswerkzeuge an den erfindungsgemäßen Werkzeugmaschinen zu erreichen.

Die Haltesichel 43 ist klappbar um die Klappachse 49 ausgebildet.

Das hier realisierte Fehlwinkelfeld 45 beträgt zum Beispiel ca. 25°. Zu beachten ist die symmetrische Ausgestaltung weswegen das tatsächliche Feld ± 25° beträgt. Je nach Ausgestaltung des angulären Rückstandes 46 ist natürlich dieser Fehlwinkel 45 einstellbar.

Um das beliebige Einführen des Bearbeitungswerkzeuges 5 in die Werkzeugzange 4 auch nicht durch die bekannten Orientierungsstifte zu behindern, ist der Orientierungsstift 48 abgeflacht und greift so in die Orientierungskerbe 53 des Bearbeitungwerkzeuges 5 ein.

Soweit eine Spindel beschrieben worden ist, ist dies gleichzusetzen mit einer Arbeitsspindel.

## Patentansprüche

1. Werkzeugmaschine mit mindestens zwei Arbeitsspindeln, welche je ein auswechselbares Bearbeitungswerkzeug tragen und antreiben, sowie mindestens einer, um eine Rotationsachse rotierende Werkzeugmagazinscheibe, welche Werkzeugzangen zur Aufnahme von Bearbeitungswerkzeugen aufweist, wobei eine Relativbewegung zwischen Werkzeugmagazinscheibe und Arbeitsspindel für das Ein- bzw. Auswechseln von Bearbeitungswerkzeugen an der Arbeitsspindel vorgesehen ist und wobei die Zangenachse (40) der Werkzeugzange (4) auf der jeweiligen werkzeugmagazinscheibe (3) radial angeordnet ist, beziehungsweise die Zangenachse (40) mit der Verbindungslinie zwischen der Rotationsachse (30) der Werkzeugmagazinscheibe (3) und der Werkzeugachse (50) des in der Werkzeugzange (4) ruhenden Bearbeitungswerkzeuges (5) einen spitzen Winkel α einschließt, **dadurch gekennzeichnet, dass** zwei Spindeln (2, 2') mit einer Werkzeugmagazinscheibe zu versorgen sind und die Werkzeugzangen (4) als Paare gruppiert auf der Werkzeugmagazinscheibe (3) angeordnet sind.

2. Werkzeugmaschine nach Anspruch 1, **dadurch gekennzeichnet, dass** ein Werkzeugvorrat von Bearbeitungswerkzeugen als Teilmagazin ausgebildet ist.

3. Werkzeugmaschine nach Anspruch 2, **dadurch gekennzeichnet, dass** das Teilmagazin als um eine Rotationsachse (30) rotierende Werkzeugmagazinscheibe (3) ausgebildet ist

4. Werkzeugmaschine nach einem der vorhergehenden Ansprüche, **dadurch gekennzeichnet, dass** zwei Teilmagazine als Werkzeugmagazinscheiben (3, 4) vorgesehen sind.

5. Werkeugmaschine nach einem der vorhergehenden Ansprüche 2 bis 4, **dadurch gekennzeichnet, dass** die Arbeitsspindeln derart bewegbar ausgebildet ist, um die jeweiligen Teilmagazine anzufahren und/oder die Teilmagazine verfahrbar und an die Arbeitsspindel verbringbar, insbesondere für einen Werkzeugwechsel verbringbar, ausgebildet sind und/oder die Teilmagazine oberhalb der Arbeitsspindel angeordnet sind.

6. Werkzeugmaschine nach einem der vorhergehenden Ansprüche, **dadurch gekennzeichnet, dass** die Werkzeugmaschine zwei werkzeugmagazinscheiben (3) aufweist, die zumindest in der Werkzeugwechselposition nah zueinander stehen und/oder die beiden Rotationsachsen (30) der zwei Werkzeugmagazinscheiben (3) parallel orientiert sind und/oder die zwei Werkzeugmagazinscheiben (3) in einer Ebene liegen.

7. Werkzeugmaschine nach Anspruch 6, **dadurch gekennzeichnet, dass** die erste Werkzeugmagazinscheibe (3) einer ersten Gruppe von Arbeitsspindeln (2) zugeordnet ist und die zweite Werkzeugmagazinscheibe (3) einer zweiten Gruppe von Arbeitsspindeln (2) zugeordnet ist und/oder für die Werkzeugmagazinscheiben (3) eine Führung (32) vorgesehen ist, entlang der die Werkzeugmagazinscheibe (3) in einer Linearbewegung (Y) linear bewegbar und an die Arbeitsspindel (2) in eine Werkzeugwechselposition bringbar ist und/oder mehrere Werkzeugmagazinscheiben (3) in einer gemeinsamen Führung (32) gleichartig bewegbar sind und/oder mehrere Werkzeugmagazinscheiben (3) unabhängig voneinander bewegbar sind.

8. Werkzeugmaschine nach einem der vorhergehenden Ansprüche 6 und 7, **dadurch gekennzeichnet, dass** jede von mehreren Werkzeugmagazinscheiben (3) je eine eigene Führung (32) aufweist und die jeweiligen Bewegungsrichtungen einen Winkel β, insbesondere einen stumpfen oder spitzen Winkel β miteinander einschließen und/oder die Werkzeugmagazinscheibe (3) ringartig ausgebildet ist und einen Rotationsantrieb aufweist und/oder die Werkzeugmagazinscheibe (3) als Mehreck ausgebildet ist.

9. Werkzeugmaschine nach einem der vorhergehenden Ansprüche, **dadurch gekennzeichnet, dass** die Werkzeugzangen (4) auf einem Kreis konzentrisch um die Rotationsachse (30) angeordnet sind.

10. Werkzeugmaschine nach einem der vorhergehenden Ansprüche, **dadurch gekennzeichnet, dass** in der Werkzeugwechselposition die Spindelachse (20) der Arbeitsspindeln (2) und die Rotationsachse (30) eine zur Linearbewegung parallele Gerade bilden und/oder in der Werkzeugwechselposition die Verbindungslinie der Spindelachse (20) der Arbeitsspindel (2) und der Rotationsachse (30) mit der Linearbewegung einen spitzen Winkel σ bildet.

11. Werkzeugmaschine nach einem der vorhergehenden Ansprüche, **dadurch gekennzeichnet, dass** die Relativbewegung (R) aus einer Überlagerung von mindestens zwei Bewegungen, z.B. der Werkzeugmagazinscheibe (3) und/oder der Arbeitsspindel (2) resultiert und/oder die Relativbewegung (R) aus einer Überlagerung der Linearbewegung (Y) der Werkzeugmagazinscheibe (3) und einer Spindellinearbewegung (X) der Arbeitsspindel (2) resultiert und/oder die Relativbewegung (R) aus einer Überlagerung der Linearbewegung der Werkzeugmagazinscheibe (3) und einer Rotation der Werkzeugmagazinscheibe (3) um deren Rotationsachse (30) resultiert.

12. Werkzeugmaschine nach einem der vorhergehenden Ansprüche, **dadurch gekennzeichnet, dass** eine oder mehrere Arbeitsspindeln (2) in einem Spindelstock gelagert sind und/oder die erste Arbeitsspindel (2) bzw. die erste Gruppe von Arbeitsspindeln in einem ersten Spindelstock und die zweite Arbeitsspindel (2) bzw. die zweite Gruppe von Arbeitsspindeln in einem zweiten Spindelstock gelagert ist/sind und/oder die Arbeitsspindel (2) bzw. die Gruppe von Arbeitsspindeln entlang einer Führungsbahn (24) in einer Spindellinearbewegung (X), insbesondere mit Hilfe des Spindelstockes, bewegbar bzw. positionierbar ist/sind und/oder die erste Arbeitsspindel (2) bzw. die erste Gruppe von Arbeitsspindeln unabhängig, abhängig oder gleichartig mit der zweiten Arbeitsspindel bzw. der zweiten Gruppe von Arbeitsspindeln bewegbar ist.

13. Werkzeugmaschine nach einem der vorhergehenden Ansprüche, **dadurch gekennzeichnet, dass** eine Werkzeugmagazinscheibe (3) ein, zwei oder mehrere Arbeitsspindeln mit Bearbeitungswerkzeugen versorgt und/oder die Werkzeugzangen (4) auf der Werkzeugmagazinscheibe (3) auf zwei oder mehreren Kreisen (37, 38) angeordnet sind und/oder die Werkzeugzangen (4) eines Kreises einer speziellen Arbeitsspindel (2) zugeordnet sind.

14. Werkzeugmaschine nach einem der vorhergehenden Ansprüche, **dadurch gekennzeichnet, dass** mit der Relativbewegung das gleichzeitige Wechseln der Bearbeitungswerkzeuge (5) von zwei oder mehreren Arbeitsspindeln (2) möglich ist und/oder die Relativbewegung (R) im Raum zwischen den Zangenachsen (40) der Werkzeugzangen (4) orientiert ist, welche bezüglich der jeweiligen Arbeitsspindel in Werkzeugwechselposition sind.

15. Werkzeugmaschine nach einem der vorhergehenden Ansprüche, **dadurch gekennzeichnet, dass** die Arbeitsspindeln (2) im Bearbeitungsraum der Maschine angeordnet sind und eine Werkzeugmagazintüre (6) vorgesehen ist, die für den Werkzeugwechselprozess öffnenbar ist, um die Werkzeugmagazinscheibe (3) in den Bereich der Arbeitsspindel (2) zu bringen und/oder die werkzeugmagazintüre (6) hängend, insbesondere an einem Maschinenständer (11) verschiebbar, angeordnet ist und/oder die werkzeugmagazintüre (6) portalartig, sich insbesondere auf einem Maschinentisch abstützend, ausgebildet ist und/oder die werkzeugmagazintüre (6) im wesentlichen parallel zur Rotationsachse (30) zu öffnen bzw. zum Schliessen bewegbar ist und/oder die Werkzeugmagazintüre (6) teleskopartig, aus mehreren Türelementen besteht.

16. Werkzeugmaschine nach einem der vorhergehenden Ansprüche, **dadurch gekennzeichnet, dass** die Werkzeugmaschine nur eine Werkzeugmagazinscheibe (3) aufweist, die mindestens zwei Arbeitsspindeln mit Bearbeitungswerkzeugen versorgt und/oder der Durchmesser des Kreises, auf welchem die Werkzeugzangen (4) angeordnet sind, groß ist gegenüber dem Abstand der Spindelachsen (2).

17. Werkzeugmaschine nach einem der vorhergehenden Ansprüche, **dadurch gekennzeichnet, dass** die Verbindungslinie der Werkzeugachsen (50) zweier Bearbeitungswerkzeuge (5), die in den jeweiligen Werkzeugzangen (4) angeordnet sind und die geeignet sind, dass diese gleichzeitig in die Arbeitsspindeln einwechselbar sind, rechtwinklig zur Zangenachse (40) der jeweiligen Werkzeugzange (4) ist und/oder der Abstand der Spindelachse (20) so gewählt ist, dass auf der Werkzeugmagazinscheibe (3) zwischen den jeweils für einen Werkzeugwechselprozess zur Verfügung stehenden Werkzeugzangen (4) eine oder mehrere andere Werkzeugzange (4) angeordnet sind und/oder der spitze Winkel α in einem Intervall von 0,1° bis 35°, bevorzugt zwischen 5° und 35° liegt.

18. Werkzeugmaschine nach einem der vorhergehenden Ansprüche, **dadurch gekennzeichnet, dass** die Werkzeugmaschine zwei Werkzeugmagazinscheiben (3) aufweist und eine erste Werkzeugmagazinscheibe für eine erste Gruppe von mehreren Arbeitsspindeln vorgesehen ist und eine zweite Werkzeugmagazinscheibe für eine zweite Gruppe von mehreren Arbeitsspindeln vorgesehen ist und die Werkzeugzangen auf den Werkzeugmagazinscheiben auf unterschiedlichen Kreisen angeordnet sind und die Zangenachse mit der Verbindungslinie zwischen der Rotationsachse der Werkzeugmagazinscheibe und der Werkzeugachse des in der Werkzeugzangen ruhenden Bearbeitungswerkzeuges einen spitzen Winkel α einschließt.

19. werkzeugmaschine nach einem der vorhergehenden Ansprüche, **dadurch gekennzeichnet, dass** die Spindelachse (20) parallel zur Rotationsachse (30) orientiert ist und/oder die Werkzeugachse (50) des in der Werkzeugzange (4) gehaltenen Bearbeitungswerkzeuges (5) parallel zur Rotationsachse (30) ist und/oder die Werkzeugmagazinscheiben (3) über den Arbeitsspindeln (2) angeordnet sind.

20. Werkzeugmaschine nach einem der vorhergehenden Ansprüche mit wenigstens einer Werkzeugzange, wobei die Werkzeugzange zumindest eine gebogene Anlagesichel aufweist, die mit dem aufzunehmenden Bearbeitungswerkzeug in dessen rotationssymmetrischen Schaftbereich zusammenwirkt und die Werkzeugzange des weiteren eine Haltevorrichtung für das Festhalten des Bearbeitungswerkzeuges in der Werkzeugzange aufweist, **dadurch gekennzeichnet, dass** die Endbereiche (42) der Anlagesichel (41) bezüglich des Halbkreises des Schaftes zurückstehen.

21. Werkzeugmaschine nach Anspruch 20, **dadurch gekennzeichnet, dass** die Haltevorrichtung als Haltesichel (43) ausgebildet ist und die Haltesichel (43) am Schaft (52) anliegt und/oder an den Endbereichen (44) der Haltesichel (43) Haltenasen (47) vorgesehen sind, die in am Bearbeitungswerkzeug (5) vorgesehene Ausnehmungen (51) haltend eingreifen und/oder die Endbereiche (44) der Haltesichel (43) bezüglich des Halbkreises des Schaftes (52) zurückstehen.

22. Werkzeugmaschine nach einem der vorhergehenden Ansprüche 20 und 21, **dadurch gekennzeichnet, dass** die Haltesichel (43) um eine Klappachse (49) klappbar, insbesondere federunterstützt klappbar ausgebildet ist und/oder die Klappachse (49) rechtwinklig zur Zangenachse (40) orientiert ist.

23. Werkzeugmaschine nach einem der vorhergehenden Ansprüche 20 bis 22, **dadurch gekennzeichnet, dass** an der Anlagesichel (41) ein insbesondere abgeflachter Orientierungsstift (48) vorgesehen ist, der mit einer Orientierungskerbe (53) des Bearbeitungswerkzeuges (5) zusammenwirkt und/oder die Anlagesichel (41) bzw. die Haltesichel (43) einen Winkelbereich von 40° bis 170°, bevorzugt von 120° bis 160° , insbesondere von 135° bis 145° überdeckt und/oder die Endbereiche der Anlagesichel (41) bzw. der Haltesichel (43) gleichartig bzw. die Anlagesichel oder die Haltesichel symmetrisch zur Zangenachse (40) ausgebildet sind und/oder die Endbereiche (44) der Haltesichel (43) tangential (470) zur Werkzeugachse (50) eines in der Werkzeugzange gehaltenen Bearbeitungswerkzeuges (5) ausläuft.

24. Werkzeugmaschine nach einem der vorhergehenden Ansprüche 20 bis 23, **dadurch gekennzeichnet, dass** ein Bearbeitungswerkzeug (5) bei einem Winkelintervall eines Fehlwinkels (45) von bis zu 40°, bevorzugt 25° in die Werkzeugzangen (4) ein- oder ausschiebbar ist.

## Claims

1. Machine tool with at least two work spindles each carrying and driving an exchangeable machining tool, as well as a tool magazine disc having tool tongs for holding machining tools and rotating around a rotational axis, a relative movement being provided between tool magazine disc and work spindle for changing and removing machining tools at the work spindle, and the tongs axis (40) of the tool tongs (4) being arranged radial on the respective tool magazine disc (3), or the tongs axis (40) forming an acute angle α with the connection line between the rotational axis (30) of the tool magazine disc (3) and the tool axis (50) of the machining tool (5) resting in the tool tongs (4), **characterised in that** two spindles (2, 2') have to be provided for by one tool magazine disc, and the tool tongs (4) are arranged in pairs on the tool magazine disc (3).

2. Machine tool according to claim 1, **characterised in that** a tool supply of machining tools is designed as partial magazine.

3. Machine tool according to claim 2, **characterised in that** the partial magazine is designed as tool magazine disc (3) rotating around a rotational axis (30).

4. Machine tool according to one of the preceding claims, **characterised in that** two partial magazines are provided as tool magazine discs (3, 4).

5. Machine tool according to one of the preceding claims 2 to 4, **characterised in that** the work spindle is designed moving in such a way that they can approach the respective partial magazines, and/or the partial magazines can be shifted and moved to the work spindle, in particular moved for a tool change, and/or the partial magazines are arranged above the work spindle.

6. Machine tool according to one of the preceding claims, **characterised in that** the machine tool has two tool magazine discs (3) which stand at least in the tool change position close to each other, and/or the two rotational axes (30) of the two tool magazine discs (3) are orientated parallel, and/or the two tool magazine discs (3) are in one plane.

7. Machine tool according to claim 6, **characterised in that** the first machine tool disc (3) is allocated to a first group of work spindles (2), and the second tool magazine disc (3) is allocated to a second group of work spindles (2), and/or for the tool magazine discs (3) a guide (32) is provided along which the tool magazine disc (3) can move linear in a linear movement (Y) and can move in a tool change position, and/or several tool magazine discs (3) can move in a common guide (32) in the same way, and/or several tool magazine discs (3) can move independently from each other.

8. Machine tool according to one of the preceding claims 6 and 7, **characterised in that** each of several tool magazine discs (3) has each its own guide (32), and the respective directions of movements form an angle β with each other, in particular an obtuse or acute angle β, and/or the tool magazine disc (3) is designed annular and has a rotational drive, and/or the tool magazine disc (3) is designed as a polygon.

9. Machine tool according to one of the preceding claims, **characterised in that** the tool tongs (4) are arranged concentrically in a circle around the rotational axis (30).

10. Machine tool according to one of the preceding claims, **characterised in that** in the tool change position the spindle axis (20) of the work spindle (2) and the rotational axis (30) form a straight line parallel to the linear movement, and/or in the tool change position the connecting line of the spindle axis (20) of the work spindle (2) and the rotational axis (30) form an acute angle σ with the linear movement.

11. Machine tool according to one of the preceding claims, **characterised in that** the relative movement (R) is the result of a superposition of at least two movements, for example of the tool magazine disc (3) and/or the work spindle (2), and/or the relative movement (R) is the result of a superposition of the linear movement (Y) of the tool magazine disc (3) and a linear spindle movement (X) of the work spindle (2), and/or the relative movement (R) is the result of a superposition of the linear movement of the tool magazine disc (3) and a rotation of the tool magazine disc (3) around its rotational axis (30).

12. Machine tool according to one of the preceding claims, **characterised in that** one or more work spindles (2) are supported in a spindle head, and/or the first work spindle (2) or the first group of work spindles is supported in a first spindle head, and the second work spindle (2) or the second group of work spindles is supported in a second spindle head, and/or the work spindle (2) or the group of work spindles can be moved or positioned along a slide way (24) in a linear spindle movement (X), in particular by means of the spindle head, and/or the first work spindle (2) or the first group of work spindles can move independently from, dependently from or identically with the second work spindle or the second group of work spindles.

13. Machine tool according to one of the preceding claims, **characterised in that** a tool magazine disc (3) provides one, two or more work spindles with machining tools, and/or the tool tongs (4) are arranged on the tool magazine disc (3) in two or more circles (37, 38), and/or the tool tongs (4) of one circle are allocated to a peculiar work spindle (2).

14. Machine tool according to one of the preceding claims, **characterised in that** with the relative movement the simultaneous change of the machining tools (5) of two or more work spindles (2) is possible, and/or the relative movement (R) is orientated in the space between the tongs axes (40) of the tool tongs (4) which are in tool change position with regard to the respective work spindle.

15. Machine tool according to one of the preceding claims, **characterised in that** the work spindles (2) are arranged in the machining room of the machine, and tool door (6) is provided which can be opened for the tool change procedure to bring the tool magazine disc (3) in the area of the work spindle (2), and/or the tool magazine door (6) is arranged suspended, in particular sliding at a machine column (11), and/or the tool magazine door (6) is designed portal-like, in particular resting on a supporting table, and/or the tool magazine door (6) can be moved for opening or closing essentially parallel to the rotational axis (30), and/or the tool magazine door (6) is telescope-like, consisting of several door elements.

16. Machine tool according to one of the preceding claims, **characterised in that** the machine tool has only one tool magazine disc (3) which provides at least two work spindles with machining tools, and/or the diameter of the circle in which the tool tongs (4) are arranged is large compared with the distance of the spindle axes (2).

17. Machine tool according to one of the preceding claims, **characterised in that** the connecting line of the tool axes (50) of two tools (5) arranged in the respective tool tongs (4) and suitable for being changed simultaneously in the tool spindles is rectangular to the tongs axis (40) of the respective tool tongs (4), and/or the distance of the spindle axes (20) is chosen such that on the tool magazine disc (3) between the tool tongs (4) available respectively for a tool change procedure one or more other tool tongs (4) are arranged, and/or the acute angle α is in an interval of 0.1° to 35°, preferably between 5° and 35°.

18. Machine tool according to one of the preceding claims, **characterised in that** the machine tool has two tool magazine discs (3), and a first tool magazine disc is provided for a first group of several work spindles, and a second tool magazine disc is provided for a second group of several work spindles, and the tool tongs are arranged on the tool magazine discs in different circles, and the tongs axis forms with the connecting line between the rotational axis of the tool magazine disc and the tool axis of the machining tool resting in the tool tongs an acute angle α.

19. Machine tool according to one of the preceding claims, **characterised in that** the spindle axis (20) is orientated parallel to the rotational axis (30), and/or the tool axis (50) of the machining tool (5) held in the tool tongs (4) is parallel to the rotational axis (30), and/or the tool magazine discs (3) are arranged above the work spindles (2).

20. Machine tool according to one of the preceding claims with at least one tool tongs, the tool tongs having at least one bent resting crescent which interacts with the machining tool to be received in its rotational symmetric shank area, and the tool tongs furthermore having a holding device for holding the machining tool in the tool tongs, **characterised in that** the edge areas (42) of the resting crescent (41) recede with respect to the semicircle of the shank.

21. Machine tool according to claim 20, **characterised in that** the holding device is designed as holding crescent (43), and the holding crescent (43) rests at the shank (52), and/or at the end areas (44) of the holding crescent (43) holding catches (47) are provided which engage in a holding way in recesses (51) provided at the machining tool (5), and/or the end areas (44) of the holding crescent (43) recede with respect to the semicircle of the shank (52).

22. Machine tool according to one of the preceding claims 20 and 21, **characterised in that** the holding crescent (43) can be folded around a folding axis (49), in particular be folded spring-supported, and/or the folding axis (49) is orientated rectangular to the tongs axis (40).

23. Machine tool according to one of the preceding claims 20 to 22, **characterised in that** at the resting crescent (41) an in particular flattened orientation pin (48) is provided interacting with an orientation chamfer (53) of the machining tool (5), and/or the resting crescent (41) or the holding crescent (43) covers an angle range of 40° to 170°, preferably of 120° to 160°, in particular of 135° to 145°, and/or the end areas of the resting crescent (41) or the holding crescent (43) are designed similarly, or the resting crescent or the holding crescent are designed symmetrically to the tongs axis (40), and/or the end areas (44) of the holding crescent (43) run out tangentially (470) to the tool axis (50) of a machining tool (5) held in the tool tongs.

24. Machine tool according to one of the preceding claims 20 to 23, **characterised in that** a machining tool (5) can be pushed in or out with an angle interval of a faulty angle (45) of up to 40°, preferably 25°, in the tool tongs (4).

## Revendications

1. Machine-outil comprenant au moins deux broches, chacune comportant et entraînant un outil d'usinage amovible, au moins un magasin à disque d'outils d'usinage tournant autour d'un axe de rotation et comportant des pinces pour maintenir des outils d'usinage, la possibilité de créer un mouvement relatif entre le magasin à disque d'outils d'usinage et la broche permettant de changer les outils d'usinage au niveau de la broche et une configuration telle que l'axe de symétrie (40) de la pince d'outil (4) situé sur le magasin à disque d'outils d'usinage (3) correspondant est, soit aligné avec le rayon du magasin à disque d'outils d'usinage, soit forme un angle aigu α avec la ligne de connexion entre l'axe de rotation (30) du magasin à disque d'outils d'usinage (3) et l'axe d'outil d'usinage (50) de l'outil d'usinage (5) situé à l'intérieur de la pince (4), **caractérisée en ce que** deux broches (2, 2') sont à alimenter par un magasin à disque d'outils d'usinage et **en ce que** les pinces (4) d'outils d'usinage sont groupées par deux et situées sur le magasin à disque d'outils d'usinage (3).

2. Machine-outil selon la revendication 1, **caractérisée en ce qu'**un stock d'outils d'usinage constitue un magasin partiel d'outils.

3. Machine-outil selon la revendication 2, **caractérisée en ce que** le magasin partiel d'outils est configuré comme un magasin à disque d'outils d'usinage (3).

4. Machine-outil selon une des revendications précédentes, **caractérisée en ce que** deux magasins partiels sont prévus comme magasins à disque d'outils d'usinage (3, 4).

5. Machine-outil selon une des revendications précédentes 2 à 4, **caractérisée en ce que** la broche est mobile de façon à pouvoir approcher chacun des magasins partiels et/ou **en ce que** les magasins partiels peuvent être déplacés vers la broche, et ceci en particulier afin de changer l'outil d'usinage et/ou **en ce que** les magasins partiels sont situés au-dessus de la broche.

6. Machine-outil selon une des revendications précédentes, **caractérisée en ce que** la machine-outil comporte deux magasins à disque d'outils d'usinage (3) situés proches l'un de l'autre lorsqu'ils sont en position de changement d'outil et/ou **en ce que** les deux axes de rotation (30) des deux magasins à disque d'outils d'usinage (3) sont parallèles et/ou **en ce que** les deux magasins à disque d'outils d'usinage (3) sont situés dans le même plan.

7. Machine-outil selon la revendication 6, **caractérisée en ce que** le premier magasin à disque d'outils d'usinage (3) est attribué à un premier groupe de broches (2) et le deuxième magasin à disque d'outils d'usinage (3) à un deuxième groupe de broches (2) et/ou **en ce qu'**un guidage (32) est prévu pour le déplacement linéaire (Y) du magasin à disque d'outils d'usinage (3) vers la broche (2) et une position de changement d'outils d'usinage et/ou **en ce que** plusieurs magasins à disque d'outils d'usinage (3) peuvent être déplacés selon un mouvement similaire et le long d'un guidage commun (32) et/ou **en ce que** plusieurs magasins à disque d'outils d'usinage (3) peuvent être déplacés indépendamment.

8. Machine-outil selon une des revendications précédentes 6 et 7, **caractérisée en ce que** chacun des magasins à disque d'outils d'usinage (3) possède son propre guidage (32) permettant des déplacements dont les directions forment entre elles un angle β, en particulier un angle β obtus ou aigu et/ou **en ce que** le magasin à disque d'outils d'usinage (3) possède une forme d'anneau et une commande rotative et/ou **en ce que** le magasin à disque d'outils d'usinage (3) possède une forme polygonale.

9. Machine-outil selon une des revendications précédentes, **caractérisée en ce que** les pinces d'outil (4) sont situées sur un cercle concentrique autour de l'axe de rotation (30).

10. Machine-outil selon une des revendications précédentes, **caractérisée en ce que**, dans la position de changement d'outil, l'axe (20) de la broche (2) et l'axe de rotation (30) sont parallèles à la ligne de déplacement linéaire et/ou **en ce que** dans la position de changement d'outil, la ligne de connexion entre l'axe (20) de la broche (2) et l'axe de rotation (30) forme un angle aigu σ avec la ligne de déplacement linéaire.

11. Machine-outil selon une des revendications précédentes, **caractérisée en ce que** le mouvement relatif (R) résulte d'une superposition d'au moins deux mouvements, par exemple celui du magasin à disque d'outils d'usinage (3) et/ou celui de la broche (2) et/ou **en ce que** le mouvement relatif (R) résulte d'une superposition du mouvement linéaire (Y) de magasin à disque d'outils d'usinage (3) et du mouvement linéaire (X) de la broche (2) et/ou **en ce que** le mouvement relatif (R) résulte d'une superposition d'un mouvement linéaire du magasin à disque d'outils d'usinage (3) et du mouvement rotatif du magasin à disque d'outils d'usinage (3) autour de son axe de rotation (30).

12. Machine-outil selon une des revendications précédentes, **caractérisée en ce qu'**une ou plusieurs broches (2) sont maintenues dans une poupée et/ou **en ce qu'**une première broche (2) ou le premier groupe de broches est maintenu(e) dans une première poupée et la deuxième broche (2) ou le deuxième groupe de broches (2) dans une deuxième poupée et/ou **en ce que** la broche (2) ou le groupe de broches peut être déplacé dans un mouvement linéaire (X) le long d'un rail de guidage (24) et en particulier à l'aide d'une poupée mobile puis positionné(e) et/ou **en ce que** la première broche (2) ou le premier groupe de broches peut être déplacé(e) indépendamment ou non de la deuxième broche ou du deuxième groupe de broches, voire en un mouvement similaire.

13. Machine-outil selon une des revendications précédentes, **caractérisée en ce qu'**un magasin à disque d'outils d'usinage (3) alimente une, deux ou plus de deux broches d'outils d'usinage et/ou **en ce que** les pinces d'outils (4) sont situées sur plusieurs cercles (37, 38) sur le magasin à disque d'outils d'usinages (3) et/ou **en ce que** les pinces d'outils (4) d'un cercle particulier sont attribuées à une broche particulière (2).

14. Machine-outil selon une des revendications précédentes, **caractérisée en ce que** le mouvement relatif permet le changement simultané des outils d'usinage (5) de deux ou plus de deux broches (2) et/ou **en ce que** le mouvement relatif (R) s'effectue dans l'espace situé entre les axes (40) des pinces d'outils (4) lesquels sont par rapport à leurs broches respectives en position de changement d'outil.

15. Machine-outil selon une des revendications précédentes, **caractérisée en ce que** les broches (2) sont situées dans l'espace d'usinage de la machine et **en ce qu'**il existe une porte (6) de magasin d'outils d'usinage pouvant être ouverte pour le processus de changement d'outils d'usinage et permettant de déplacer le magasin à disque d'outils d'usinage (3) vers la zone de la broche (2) et/ou **en ce que** la porte (6) de magasin d'outils d'usinage est accrochée et peut en particulier coulisser au niveau d'un support (11) de machine et/ou **en ce que** la porte (6) de magasin d'outils d'usinage possède la forme d'un portique et s'appuie en particulier sur une table de machine et/ou **en ce que** la porte (6) de magasin d'outils d'usinage est mobile et s'ouvre et se ferme approximativement parallèlement à l'axe de rotation (30) et/ou **en ce que** la porte (6) de magasin d'outils d'usinage est constituée de façon télescopique de plusieurs éléments de porte.

16. Machine-outil selon une des revendications précédentes, **caractérisée en ce que** la machine-outil n'utilise qu'un magasin à disque d'outils d'usinage (3) pour alimenter au moins deux broches d'outils d'usinage et/ou **en ce que** le diamètre du cercle sur lequel sont situées les pinces d'outils (4) est grand par rapport à la distance entre les broches (2).

17. Machine-outil selon une des revendications précédentes, **caractérisée en ce que** la ligne de connexion entre les axes d'outils d'usinage (50) de deux outils d'usinage voisins (5), chacun maintenu dans les pinces d'outils (4) correspondantes et appropriées pour permettre un changement d'outils d'usinage simultané des broches, est orientée perpendiculairement à l'axe (40) de la pince d'outils respective (4) et/ou **en ce que** la distance entre les axes (20) des broches est choisie de façon à ce qu'une ou plusieurs autres pinces d'outils (4) sont situées sur le magasin à disque d'outils d'usinage (3) et entre les pinces d'outils (4) prévues pour un processus de changement d'outils d'usinage et/ou **en ce que** l'angle aigu α est situé dans un intervalle allant de 0,1° à 35°, et de préférence allant de 5° à 35°.

18. Machine-outil selon une des revendications précédentes, **caractérisée en ce que** cette machine-outil comporte deux magasins à disque d'outils d'usinage (3) avec un premier magasin à disque d'outils d'usinage destiné à un premier groupe de plusieurs broches et un deuxième magasin à disque d'outils d'usinage destiné à un deuxième groupe de plusieurs broches, des pinces d'outils situées sur le magasin à disque d'outils d'usinage et sur des cercles différents et les axes des pinces d'outils formant un angle aigu α avec la ligne de connexion entre l'axe de rotation du magasin à disque d'outils d'usinage et l'axe d'outil maintenu dans la pince d'outil.

19. Machine-outil selon une des revendications précédentes, **caractérisée en ce que** l'axe (20) des broches est parallèle à l'axe de rotation (30) et/ou **en ce que** l'axe (50) de l'outil d'usinage (5) maintenu dans la pince d'outil (4) est parallèle à l'axe de rotation (30) et/ou en ce que les magasins à disque d'outils d'usinage (3) sont situés au-dessus des broches (2).

20. Machine-outil selon une des revendications précédentes, comportant au moins une pince d'outil dont l'élément d'appui courbé correspond à la courbure du corps d'outil d'usinage à saisir et à symétrie rotative et un autre élément correspond à un moyen d'immobilisation permettant de bloquer l'outil d'usinage dans la pince, **caractérisée en ce que** les extrémités (42) de l'élément courbé (41) sont situées en retrait par rapport au demi-cercle du corps d'outil.

21. Machine-outil selon la revendication 20, **caractérisée en ce que** le moyen d'immobilisation possède un élément courbé (43) qui est en contact avec le corps d'outil (52) et/ou **en ce que** les extrémités (44) de l'élément courbé (43) comportent des crochets de maintien (47) qui rentrent dans des évidements (51) prévus au niveau de l'outil d'usinage (5) afin de le maintenir et/ou **en ce que** les extrémités (44) de l'élément courbé (43) sont situées en retrait par rapport au demi-cercle du corps d'outil (52).

22. Machine-outil selon une des revendications précédentes 20 ou 21, **caractérisée en ce que** l'élément courbé (43) peut pivoter autour d'un axe de rotation (49) et en particulier pivoter sous l'effet d'un ressort et/ou **en ce que** cet axe de rotation (49) est perpendiculaire à l'axe (40) de la pince.

23. Machine-outil selon une des revendications précédentes 20 à 22, **caractérisée en ce qu'**une tige (48) d'orientation, en particulier aplatie, est située au niveau de l'élément courbé (41) et peut interagir avec une encoche d'orientation (53) de l'outil d'usinage (5) et/ou **en ce que** l'élément courbé d'appui (41) ou l'élément courbé de maintien (43) couvre des angles allant de 40° à 170°, de préférence de 120° à 160° et en particulier de 135° à 145° et/ou **en ce que** les extrémités de l'élément courbé d'appui (41) ou de l'élément courbé de maintien (43) sont similaires et symétriques par rapport à l'axe (40) de la pince et/ou **en ce que** les extrémités (44) de l'élément courbé de maintien (43) soient orientées sur la tangente (470) de l'axe (50) du corps d'un outil (5) maintenu dans la pince d'outil.

24. Machine-outil selon une des revendications précédentes 20 à 23, **caractérisée en ce qu'**un outil d'usinage (5) peut être introduit dans les pinces (4) ou ressorti jusqu'à une erreur d'angle (45) allant jusqu'à 40° et de préférence jusqu'à 25°.
